(19) Europäisches Patentamt
European Patent Office
Office européen des brevets

(11) **EP 4 439 390 A1**

(12) **EUROPEAN PATENT APPLICATION**
published in accordance with Art. 153(4) EPC

(43) Date of publication:
**02.10.2024 Bulletin 2024/40**

(21) Application number: **21969242.3**

(22) Date of filing: **27.12.2021**

(51) International Patent Classification (IPC):
**G06N 3/08** (2023.01)

(52) Cooperative Patent Classification (CPC):
**G06N 3/08**

(86) International application number:
**PCT/CN2021/141461**

(87) International publication number:
**WO 2023/122854 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **SHI, Nanxiang**
  **Shenzhen, Guangdong 518129 (CN)**
• **LIU, Wuping**
  **Shenzhen, Guangdong 518129 (CN)**
• **TANG, Weiwei**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **DATA PROCESSING METHOD AND APPARATUS**

(57) Embodiments of this application disclose a data processing method and apparatus in the field of artificial intelligence. The data processing method includes: obtaining number information of a first node in a neural network graph, where the number information includes a tensor number and an axis number, a tensor indicated by the tensor number is a to-be-sliced tensor, and an axis indicated by the axis number is a slicing axis of the to-be-sliced tensor; and slicing, along the axis indicated by the axis number, the to-be-sliced tensor indicated by the tensor number of the first node, where the neural network graph represents a neural network, and the first node is a calculation unit of the neural network. Number information of each node is annotated in the neural network graph, the number information of the node is obtained, and tensor slicing of the node is completed based on the number information. In embodiments of this application, node slicing in any neural network graph can be completed, and applicability of a neural network graph slicing solution can be enhanced, so that any neural network graph can be directly sliced.

Obtain number information of a first node in a neural network graph, where the number information includes a tensor number and an axis number, a tensor indicated by the tensor number is a to-be-sliced tensor, and an axis indicated by the axis number is a slicing axis of the to-be-sliced tensor — S710

Slice, along the slicing axis indicated by the axis number, the to-be-sliced tensor indicated by the tensor number of the first node — S720

FIG. 7

**Description**

**TECHNICAL FIELD**

Embodiments of this application relate to the field of artificial intelligence, and more specifically, to a data processing method and apparatus.

**BACKGROUND**

Artificial intelligence (artificial intelligence, AI) is a theory, a method, a technology, or an application system that simulates, extends, and expands human intelligence by using a digital computer or a machine controlled by a digital computer, to sense an environment, obtain knowledge, and obtain an optimal result based on the knowledge. In other words, artificial intelligence is a branch of computer science, and seeks to learn of essence of intelligence and produce a new intelligent machine that can react in a way similar to human intelligence. Artificial intelligence is to study design principles and implementation methods of various intelligent machines, so that the machines have perception, inference, and decision-making functions. Researches in the field of artificial intelligence include a robot, natural language processing, computer vision, decision-making and inference, human-computer interaction, recommendation and search, an AI basic theory, and the like.

In the field of deep learning, when calculating a neural network model, a neural network compiler processes the neural network model in a form of a computational graph. However, because a large amount of data needs to be calculated, a problem that performance cannot be improved due to memory bound (memory bound) often occurs. A neural network graph slicing solution can effectively resolve the memory bound problem caused by an excessively large amount of data. However, because operators in a neural network graph are of various types, a customization attribute of the neural network graph slicing solution is excessively strong, and the slicing solution cannot be used in a slicing operation on another neural network graph. This restricts application and development of the neural network graph slicing solution.

Therefore, how to enhance applicability of the neural network graph slicing solution to directly slice any neural network graph is an urgent problem to be resolved.

**SUMMARY**

Embodiments of this application provide a data processing method and apparatus, to enhance applicability of a neural network graph slicing solution, so that any neural network graph can be directly sliced.

According to a first aspect, a data processing method is provided, including: obtaining number information of a first node in a neural network graph, where the number information includes a tensor number and an axis number, a tensor indicated by the tensor number is a to-be-sliced tensor, and an axis indicated by the axis number is a slicing axis of the to-be-sliced tensor; and slicing, along the slicing axis indicated by the axis number, the to-be-sliced tensor indicated by the tensor number of the first node, where the neural network graph represents a neural network, and the first node represents a calculation unit of the neural network.

Number information of each node is annotated in the neural network graph, and the number information corresponding to each node is decoupled from a specific type and a specific operation of each node. In this way, in a case in which the number information is decoupled from the specific type and the specific operation of the node, when any specific neural network graph is sliced, the technical solution in embodiments of this application is used, in other words, number information of each node in the any specific neural network graph is annotated in the neural network graph, and the neural network graph is sliced. In this way, in embodiments of this application, node slicing of the any neural network graph can be implemented, and applicability of a neural network graph slicing solution can be improved. In addition, network slicing implemented based on the number information can perfectly replace a conventional slicing method that requires a human to analyze a network. Because a process is completely automatic, a slicing manner with optimal performance can be found through a plurality of attempts by neural network slicing implemented based on the number information. This greatly improves efficiency and performance benefit of the neural network graph slicing, and promotes application and development of the neural network graph slicing solution.

In a possible implementation, when the to-be-sliced tensor is an input tensor of the first node, the number information further includes an indication value, and the indication value indicates whether adjacent subtensors obtained by slicing the to-be-sliced tensor along the slicing axis overlap.

The indication value is carried in the number information. A data processing apparatus in embodiments of this application flexibly selects the number information when slicing the node in the neural network graph. Because data may overlap after axes of some operators are sliced, an amount of data is increased, and the performance benefit is reduced. In embodiments of this application, number information that does not overlap is preferentially selected.

In a possible implementation, the number information further includes an indication value, and the indication value indicates whether adjacent subtensors obtained by slicing the to-be-sliced tensor along the slicing axis overlap.

The indication value is carried in the number information. In embodiments of this application, it can be determined whether axes indicated by axis numbers in the number information correspondingly overlap, and number information that does not overlap is preferentially selected.

In a possible implementation, when the to-be-sliced tensor is an input tensor of the first node, the indication value indicates that the adjacent subtensors obtained by slicing the to-be-sliced tensor along the slicing axis overlap; when the to-be-sliced tensor is an input tensor of the first node, the indication value indicates that the adjacent subtensors obtained by slicing the to-be-sliced tensor along the slicing axis do not overlap; or when the to-be-sliced tensor is an output tensor of the first node, the indication value indicates that the adjacent subtensors obtained by slicing the to-be-sliced tensor along the slicing axis do not overlap.

In a possible implementation, a second node is an upper-level node of the first node, the second node belongs to the neural network graph, and the method further includes: determining $M$ input intervals corresponding to a first input tensor of the first node, where $M$ is a slicing quantity of the first input tensor; obtaining a slicing quantity $K$ of a second output tensor of the second node; and determining, based on the $M$ input intervals and $K$, $K$ output intervals corresponding to the second output tensor of the second node, where $M$ and $K$ are both positive integers.

The $K$ output intervals corresponding to the output tensor of the second node are determined in a reverse derivation manner based on the $M$ input intervals corresponding to the input tensor of the first node and the slicing quantity $K$ of the output tensor of the second node, and the $K$ output intervals are expressed in a form of intervals. In this manner, in embodiments of this application, slicing and aggregation (no matter in parallel computing or in-core (core) buffer (buffer) optimization scenarios, aggregation of slicing represents an end of one optimization action, and in these scenarios, usually, a longer optimization action brings more obvious performance benefit) caused when different slicing quantities exist in the neural network can be resolved. Therefore, effect of the neural network slicing can be improved to some extent according to this solution.

In a possible implementation, the determining, based on the $M$ input intervals and $K$, $K$ output intervals corresponding to the second output tensor of the second node includes: if $M$ is greater than $K$, aggregating the $M$ input intervals into the $K$ output intervals; if $M$ is equal to $K$, performing one-to-one correspondence on the $M$ input intervals and the $K$ output intervals; or if $M$ is smaller than $K$, dividing the $M$ input intervals into the $K$ output intervals.

In a possible implementation, the determining $M$ input intervals corresponding to a first input tensor of the first node includes: determining $M$ output intervals corresponding to a first output tensor of the first node, where $M$ is a slicing quantity corresponding to the first output tensor of the first node; and performing reverse derivation on the $M$ output intervals corresponding to the first output tensor of the first node, to determine the $M$ input intervals corresponding to the first input tensor of the first node.

The $M$ input intervals corresponding to the input tensor of the first node are determined in the reverse derivation manner. In embodiments of this application, a plurality of output intervals corresponding to the output tensor of the second node can be determined based on the $M$ input intervals. In this way, data group dependency is completed, forced data aggregation is avoided, and the performance benefit brought by the neural network slicing can be improved.

In a possible implementation, a second node is an upper-level node of the first node and a third node, the second node and the third node belong to the neural network graph, and the method further includes: determining $M$ input intervals corresponding to a first input tensor of the first node and $Y$ input intervals corresponding to a third input tensor of the third node, where $M$ is a slicing quantity of the first input tensor, and $Y$ is a slicing quantity of the third input tensor; obtaining a slicing quantity $K$ of a second output tensor of the second node; and determining, based on the $M$ input intervals, the $Y$ input intervals, and $K$, $K$ output intervals corresponding to the output tensor of the second node, where $M$, $K$, and $Y$ are all positive integers.

According to the foregoing technical solution, when the second node corresponds to a plurality of lower-level nodes, and a plurality of different output intervals corresponding to output tensors of the second node are obtained by using different branch lines, a union set corresponding to two intervals is obtained through derivation by using different branch lines, and the plurality of output intervals corresponding to the output tensor of the second node are finally determined. In this way, a problem that the plurality of lower-level nodes cannot obtain complete data can be avoided in embodiments of this application. Because the obtained data is a union set of intervals of the lower-level nodes, it can be ensured that each lower-level node can obtain a data block size required by the lower-level node. This avoids a case that is caused by data stomping and in which a neural network inference result is abnormal or training cannot be converged.

According to a second aspect, a data processing apparatus is provided, including: an obtaining unit, configured to obtain number information of a first node in a neural network graph, where the number information includes a tensor number and an axis number, a tensor indicated by the tensor number is a to-be-sliced tensor, and an axis indicated by the axis number is a slicing axis of the to-be-sliced tensor; and a slicing unit, configured to slice, along the slicing axis indicated by the axis number, the to-be-sliced tensor indicated by the tensor number of the first node, where the neural network graph represents a neural network, and the first node represents a calculation unit of the neural network.

In a possible implementation, when the to-be-sliced tensor is an input tensor of the first node, the number information further includes an indication value, and the indication value indicates whether adjacent subtensors obtained by slicing the to-be-sliced tensor along the slicing axis overlap.

In a possible implementation, the number information further includes an indication value, and the indication value indicates whether adjacent subtensors obtained by slicing the to-be-sliced tensor along the slicing axis overlap.

In a possible implementation, when the to-be-sliced tensor is an input tensor of the first node, the indication value indicates that the adjacent subtensors obtained by slicing the to-be-sliced tensor along the slicing axis overlap; when the to-be-sliced tensor is an input tensor of the first node, the indication value indicates that the adjacent subtensors obtained by slicing the to-be-sliced tensor along the slicing axis do not overlap; or when the to-be-sliced tensor is an output tensor of the first node, the indication value indicates that the adjacent subtensors obtained by slicing the to-be-sliced tensor along the slicing axis do not overlap.

In a possible implementation, a second node is an upper-level node of the first node, the second node belongs to the neural network graph, and the apparatus further includes a processing unit. The processing unit is configured to determine M input intervals corresponding to a first input tensor of the first node, where M is a slicing quantity of the input tensor. The obtaining unit is further configured to obtain a slicing quantity K of a second output tensor of the second node. The processing unit is further configured to determine, based on the M input intervals and K, K output intervals corresponding to the second output tensor of the second node, where M and K are both positive integers.

In a possible implementation, the processing unit is configured to: if M is greater than K, aggregate the M input intervals into the K output intervals; if M is equal to K, perform one-to-one correspondence on the M input intervals and the K output intervals; or if M is smaller than K, divide the M input intervals into the K output intervals.

In a possible implementation, the processing unit is further configured to: determine M output intervals corresponding to a first output tensor of the first node, where M is a slicing quantity corresponding to the first output tensor of the first node; and perform reverse derivation on the M output intervals corresponding to the first output tensor of the first node, to determine the M input intervals corresponding to the first input tensor of the first node.

In a possible implementation, a second node is an upper-level node of the first node and a third node, the second node and the third node belong to the neural network graph, and the apparatus further includes a processing unit. The processing unit is configured to determine M input intervals corresponding to a first input tensor of the first node and Y input intervals corresponding to a second input tensor of the third node, where M is a slicing quantity of the first input tensor, and Y is a slicing quantity of the second input tensor. The obtaining unit is further configured to obtain a slicing quantity K of a second output tensor of the second node. The processing unit is further configured to determine, based on the M input intervals, the Y input intervals, and K, K output intervals corresponding to the output tensor of the second node, where M, Y, and K are all positive integers.

According to a third aspect, a computer-readable storage medium is provided. The computer-readable storage medium is configured to store a computer program, and when the computer program is run on a computer or a processor, the computer or the processor is enabled to perform the method according to any one of the first aspect or the possible implementations of the first aspect.

According to a fourth aspect, a computer program product is provided. The computer program product includes computer program code, and when the computer program code is run, the method according to any one of the first aspect or the possible implementations of the first aspect is implemented.

**BRIEF DESCRIPTION OF DRAWINGS**

FIG. 1 is a diagram of an artificial intelligence main framework according to an embodiment of this application;
FIG. 2 is a diagram of an application environment according to an embodiment of this application;
FIG. 3 is a diagram of a structure of a convolutional neural network according to an embodiment of this application;
FIG. 4 is a diagram of a structure of another convolutional neural network according to an embodiment of this application;
FIG. 5 is a diagram of a hardware structure of a chip according to an embodiment of this application;
FIG. 6 is a diagram of a system architecture according to an embodiment of this application;
FIG. 7 is a schematic flowchart of a data processing method according to an embodiment of this application;
FIG. 8 is a schematic flowchart of another data processing method according to an embodiment of this application;
FIG. 9 is a diagram of a node derivation relationship according to an embodiment of this application;
FIG. 10 is a schematic flowchart of still another data processing method according to an embodiment of this application;
FIG. 11 is a diagram of another node derivation relationship according to an embodiment of this application;
FIG. 12 is a diagram of a structure of a data processing apparatus according to an embodiment of this application; and

FIG. 13 is a diagram of a hardware structure of a data processing apparatus according to an embodiment of this application.

## DESCRIPTION OF EMBODIMENTS

The following describes technical solutions of embodiments in this application with reference to accompanying drawings.

In embodiments of this specification, the claims, and the accompanying drawings of this application, the terms "first", "second", "third", and the like are intended to distinguish between similar objects, but do not necessarily indicate a specific order or sequence. In addition, the terms "include", "have", and any variant thereof are intended to cover non-exclusive inclusion, for example, inclusion of a series of steps or units. A method, a system, a product, or a device is not necessarily limited to clearly listed steps or units, but may include other steps or units that are not clearly listed and that are inherent to the process, the method, the product, or the device.

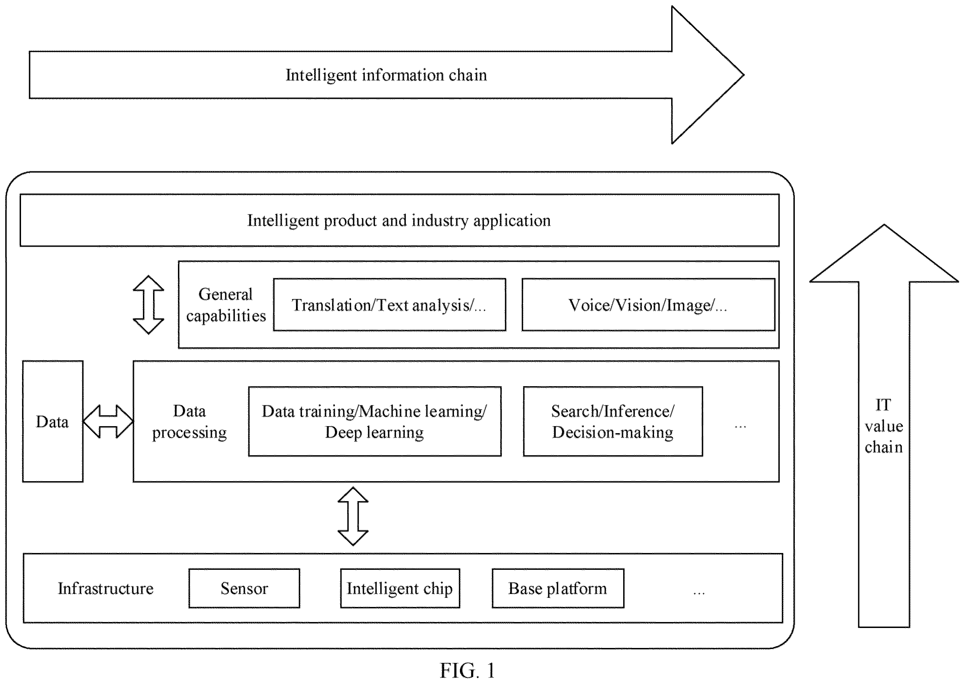

FIG. 1 is a diagram of an artificial intelligence main framework according to an embodiment of this application. The main framework describes an overall working procedure of an artificial intelligence system, and is applicable to a general requirement of the field of artificial intelligence.

The following describes in detail the artificial intelligence main framework from two dimensions: an "intelligent information chain" (a horizontal axis) and an "information technology (information technology, IT) value chain" (a vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom".

The "IT value chain" reflects a value brought by artificial intelligence to the information technology industry in a process from an underlying infrastructure and information (providing and processing technology implementation) of human intelligence to a systemic industrial ecology.

(1) Infrastructure

The infrastructure provides computing capability support for the artificial intelligence system, implements communication with the external world, and implements support by using a base platform.

The infrastructure can communicate with the outside by using a sensor, and a computing capability of the infrastructure can be provided by an intelligent chip.

The intelligent chip herein may be a hardware acceleration chip, for example, a central processing unit (central processing unit, CPU), a neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA).

A basic platform of the infrastructure may include related platforms assurance and support such as a distributed computing framework and a network, and may include cloud storage and computing, an interconnection and interworking network, and the like.

For example, the infrastructure can communicate with the outside by using the sensor, to obtain data. Then, the data is provided to an intelligent chip in a distributed computing system provided by the basic platform, for computing.

(2) Data

Data at an upper layer of the infrastructure indicates a data source in the field of artificial intelligence. The data relates to a graph, an image, speech, and text, further relates to Internet of things data of a conventional device, and includes service data of an existing system and perception data like force, displacement, a liquid level, a temperature, and humidity.

(3) Data processing

The data processing usually includes a processing manner, for example, data training, machine learning, deep learning, search, inference, or decision-making. Machine learning and deep learning may mean performing symbolized and formalized intelligent information modeling, extraction, preprocessing, training, and the like on data.

Inference is a process in which a pattern of human intelligent inference is simulated in a computer or an intelligent system, and machine thinking and problem resolving are performed by using formalized information according to an inferring control policy. A typical function is searching and matching.

Decision-making is a process in which a decision is made after intelligent information is inferred, and usually provides functions such as classification, ranking, and prediction.

(4) General capabilities

After data processing mentioned above is performed on the data, some general capabilities may further be formed based on a data processing result. For example, the general capabilities may be an algorithm or a general system, for example, translation, text analysis, computer vision processing, speech recognition, and image recognition.

(5) Intelligent product and industry application

The intelligent product and the industry application are a product and an application of the artificial intelligence system in various fields, and are package of an overall solution of the artificial intelligence, so that decision-making for intelligent information is productized and an application is implemented. Application fields mainly include intelligent manufacturing, intelligent transportation, intelligent home, intelligent health care, intelligent security protection, autonomous driving, a safe city, an intelligent terminal, and the like.

Embodiments of this application may be applied to a plurality of fields of artificial intelligence, for example, fields such as intelligent manufacturing, intelligent transportation, intelligent home, intelligent health care, intelligent security protection, autonomous driving, and a safe city.

Because embodiments of this application relate to massive applications of a neural network, for ease of understanding, the following describes terms and concepts related to the neural network that may be used in embodiments of this application.

(1) Neural network

The neural network (neural network, NN) may include a neural unit. The neural unit may be an operation unit that uses $x_s$ and an intercept of 1 as an input. An output of the operation unit may be as follows:

$$h_{W,b}(x) = f\left(W^T x\right) = f\left(\sum_{s=1}^{n} W_s x_s + b\right) \quad (1\text{-}1)$$

s = 1, 2, ..., or n, n is a natural number greater than 1, $W_s$ is a weight of $x_s$, and b is a bias of the neuron.
f is an activation function (activation function) of the neuron, used to introduce a non-linear feature into the neural network, to convert an input signal in the neuron into an output signal. The output signal of the activation function may be used as an input of a next layer.

The neural network is a network constituted by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having a plurality of hidden layers. The DNN is divided based on locations of different layers. Neural networks inside the DNN may be classified into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer.

Although the DNN seems complex, it is not complex in terms of work at each layer. Simply speaking, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, $W$ is a weight matrix (also referred to as a coefficient), and $\alpha()$ is an activation function. At each layer, only such a simple operation is performed on the input vector $\vec{x}$ to obtain the output vector. Because there are a plurality of layers in the DNN, there are also a plurality of coefficients $W$ and a plurality of offset vectors $\vec{b}$. Definitions of the parameters in the DNN are as follows: The coefficient $W$ is used as an example. It is assumed that in a DNN with three layers, a linear coefficient from the fourth neuron at the second layer to the second neuron at the third layer is defined as $W_{24}^{3}$. The superscript 3 represents a layer at which the coefficient $W$ is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer does not have the parameter $W$. In the deep neural network, more hidden layers make the network more capable of describing a complex case in the real world. Theoretically, a model with more parameters has higher complexity and a larger "capacity". It indicates that the model can complete a more complex learning task. A process of training the deep neural network is a process of learning a weight matrix, and a final objective of training is to obtain weight matrices (weight matrices including vectors $W$ at a plurality of layers) of all layers in a trained deep neural network.

(3) Convolutional neural network (convolutional neural network, CNN)

The convolutional neural network is a deep neural network with a convolutional structure, and is a deep learning (deep learning) architecture. The deep learning architecture is to perform multi-level learning at different abstract levels by using a machine learning algorithm. As a deep learning architecture, the CNN is a feed-forward (feed-forward) artificial neural network. Each neuron in the feed-forward artificial neural network may respond to an image input into the feed-forward artificial neural network.

The convolutional neural network includes a feature extractor including a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that a picture information extraction manner is irrelevant to a location. The convolution kernel may be initialized in a form of a matrix of a random size. In a training process of the convolutional neural network, an appropriate weight may be obtained for the convolution kernel through learning. In addition, direct benefit brought by weight sharing is that connections between layers in the convolutional neural network are reduced and an overfitting risk is lowered.

(4) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers in the deep neural network). For example, if the predicted value of the network is high, the weight vector is adjusted to decrease the predicted value, and adjustment is continuously performed until the deep neural network can predict the target value that is actually expected or a value that is very close to the target value that is actually expected. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss.

(5) Forward propagation algorithm

The forward propagation algorithm, is a forward-to-back calculation algorithm. The forward propagation algorithm is used to perform operations backwards layer by layer from an input layer to an output layer, to obtain an output result. The result of the output layer is obtained by performing operations backwards layer by layer by using the forward propagation algorithm.

(6) Back propagation algorithm

In a training process, a neural network may correct values of parameters of an initial neural network model by using an error back propagation (back propagation, BP) algorithm, so that a reconstruction error loss in the neural network model becomes increasingly smaller. Specifically, an input signal is forward transmitted until an error loss is generated in an output, and the parameter of the initial neural network model is updated through back propagation of information about the error loss, to converge the error loss. The back propagation algorithm is an error-loss-centered back propagation motion intended to obtain a parameter like a weight matrix, of an optimal neural network model.

(7) Tensor (tensor)

The tensor is a multi-dimensional data storage form, a data dimension is referred to as a tensor order. Tensors may be regarded as generalization of a vector and a matrix in multi-dimensional space, the vector may be regarded as a one-dimensional tensor, and the matrix may be regarded as a two-dimensional tensor. In deep learning, a tensor is used to store data corresponding to a higher-order array. The tensor has the following basic attributes:

a shape (shape) is used to collect statistics on quantities of elements in dimensions;
a rank (rank) indicates a total quantity of dimensions; and
an axis (axis) indicates a specific dimension.

Generally, the rank of the tensor indicates a quantity of axes of the tensor. In a case in which the axis may be sliced, the axis may be referred to as a slicing axis or a sliceable axis.

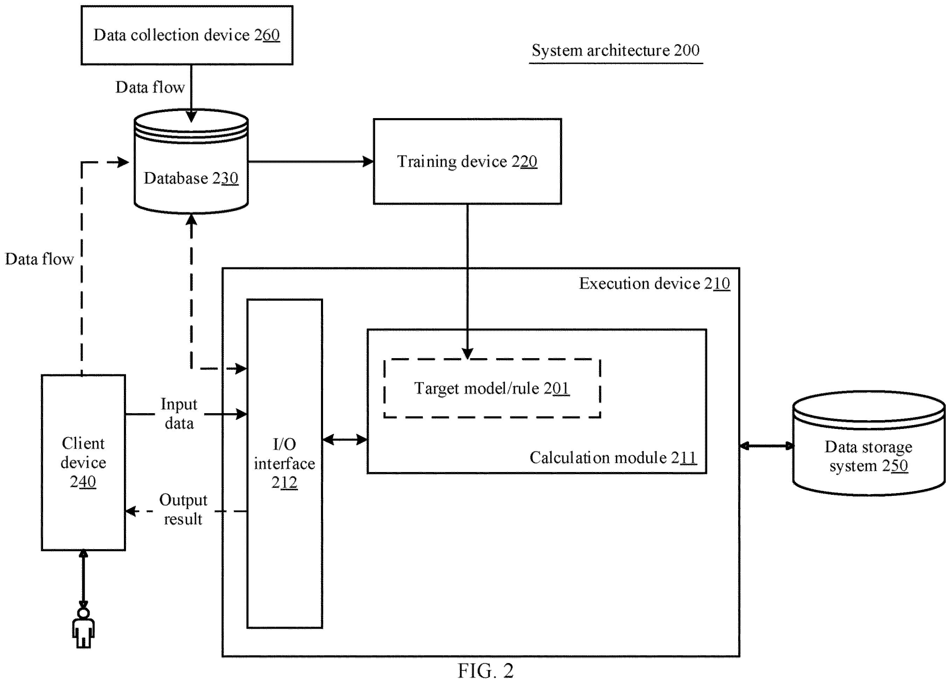

FIG. 2 is a diagram of a system architecture according to an embodiment of this application. In FIG. 2, a data collection device 260 is configured to collect training data. For a data processing method in embodiments of this application, if the training data is image data, the training data may include a training image and a processing result corresponding to the training image, for example, a classification result corresponding to the training image, where the classification result of the training image may be a manually pre-annotated result.

After collecting the training data, the data collection device 260 stores the training data in a database 230. A training device 220 obtains a target model/rule 201 through training based on the training data maintained in the database 230.

The following describes the target model/rule 201 obtained by the training device 220 based on the training data. The training device 220 processes the input training data, and compares an output result with a training identifier corresponding to the input training data until a difference between the result output by the training device 220 and the training identifier is less than a specific threshold. In this way, training of the target model/rule 201 is completed.

The target model/rule 201 in embodiments of this application may specifically be a neural network or a neural network graph, for example, a convolutional neural network. It should be noted that, in actual application, the training data maintained in the database 230 is not necessarily collected by the data collection device 260, but may be received from another device. In addition, it should be noted that the training device 220 may not train the target model/rule 201 entirely based on the training data maintained in the database 230, and may train a model by obtaining training data from a cloud or another place. The foregoing description should not be construed as a limitation to embodiments of this application.

The target model/rule 201 obtained through training by the training device 220 may be used in different systems or devices, for example, an execution device 210 shown in FIG. 2. The execution device 210 may be a terminal, for example, a mobile phone terminal, a tablet computer, a laptop computer, an augmented reality (augmented reality, AR) AR/virtual reality (virtual reality, VR) terminal, or a vehicle-mounted terminal, or may be a server, a cloud, or the like. In FIG. 2, the execution device 210 configures an input/output (input/output, I/O) interface 212, configured to exchange data with an external device. A user may input data to the I/O interface 212 by using a client device 240. The input data in embodiments of this application may include to-be-processed data input by using the client device.

A preprocessing module 213 and a preprocessing module 214 are configured to perform preprocessing based on the input data (for example, the to-be-processed data) received by the I/O interface 212. In embodiments of this application, the preprocessing module 213 and the preprocessing module 214 may not exist (or only one of the preprocessing module 213 and the preprocessing module 214 exists), and a calculation module 211 is directly used to process the input data.

In a process in which the execution device 210 preprocesses the input data, or in a process in which the calculation module 211 of the execution device 210 performs related processing like calculation, the execution device 210 may invoke data, code, and the like in a data storage system 250 for corresponding processing; and may also store, in the data storage system 250, data, instructions, and the like that are obtained through the corresponding processing.

Finally, the I/O interface 212 returns a processing result, for example, a processing result of the obtained data, to the client device 240, to provide the processing result for the user.

It should be noted that the training device 220 may generate, based on different training data, the corresponding target models/rules 201 for different targets or different tasks. The corresponding target models/rules 201 may be used to implement the foregoing targets or complete the foregoing tasks, thereby providing a desired result for the user.

In the case shown in FIG. 2, the user may manually specify input data, and the input data may be manually specified through an interface provided by the I/O interface 212. In another case, the client device 240 may automatically send the input data to the I/O interface 212. If it is required that the client device 240 needs to obtain a grant from the user for automatically sending the input data, the user may set corresponding permission in the client device 240. The user may view, on the client device 240, a result output by the execution device 210, and a specific presentation form may be a specific manner, for example, display, a sound, or an action. The client device 240 may also be used as a data collection end to collect, as new sample data, the input data that is input into the I/O interface 212 and an output result that is output from the I/O interface 212 shown in the figure, and store the new sample data in the database 230. Certainly, the client device 240 may alternatively not perform collection, but the I/O interface 212 directly stores, as new sample data into the database 230, the input data that is input into the I/O interface 212 and the output result that is output from the I/O interface 212 that are shown in the figure.

It should be noted that FIG. 2 is merely a diagram of a system architecture according to an embodiment of this application. A location relationship between the devices, the components, the modules, and the like shown in the figure does not constitute any limitation. For example, in FIG. 2, the data storage system 250 is an external memory relative to the execution device 210, but in another case, the data storage system 250 may alternatively be disposed in the execution device 210.

As shown in FIG. 2, the target model/rule 201 is obtained through training by the training device 220. In embodiments of this application, the target model/rule 201 may be a neural network in this application. Specifically, the neural network used in embodiments of this application may be a CNN, a deep convolutional neural network (deep convolutional neural network, DCNN), a recurrent neural network (recurrent neural network, RNN), or the like.

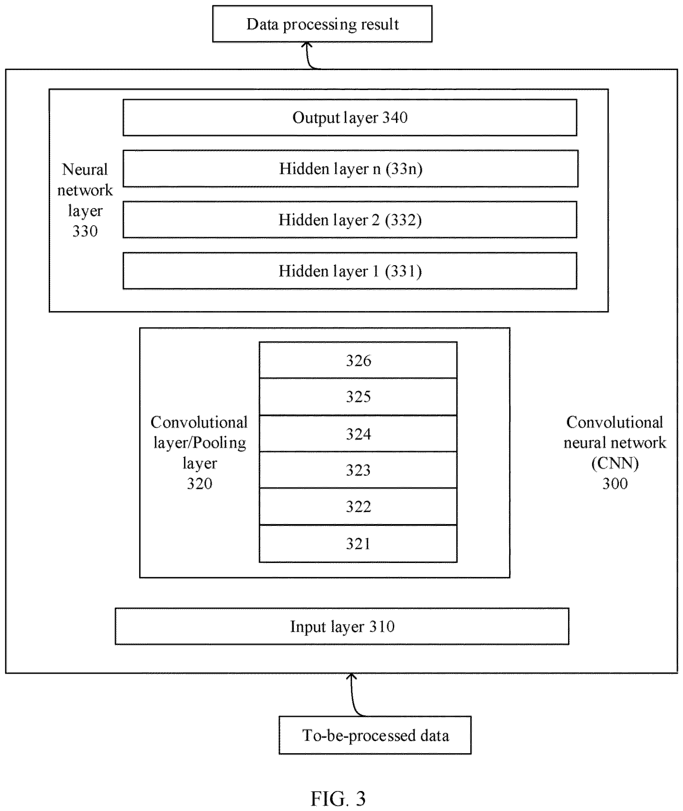

Because the CNN is a very common neural network, a structure of the CNN is described below in detail with reference to FIG. 3. As described in the foregoing description of basic concepts, the convolutional neural network is a deep neural network with a convolutional structure, and is a deep learning (deep learning) architecture. The deep learning architecture is to perform multi-level learning at different abstract levels by using a machine learning algorithm. As the deep learning architecture, the CNN is a feed-forward (feed-forward) artificial neural network. Each neuron in the feed-forward artificial neural network may respond to data input into the feed-forward artificial neural network.

A structure of a neural network specifically used in the data processing method in embodiments of this application may be shown in FIG. 3. In FIG. 3, a convolutional neural network (CNN) 300 may include an input layer 310, a convolutional layer/pooling layer 320 (the pooling layer is optional), and a neural network layer 330. The input layer 310 may obtain to-be-processed data, and send the obtained to-be-processed data to the convolutional layer/pooling layer 320 and the subsequent neural network layer 330 for processing, to obtain a data processing result. The following describes in detail an architecture of the layer in the CNN 300 in FIG. 3.

Convolutional layer/Pooling layer 320:

Convolutional layer:

As shown in FIG. 3, for example, the convolutional layer/pooling layer 320 may include layers 321 to 326. For example, in an implementation, the layer 321 is a convolutional layer, the layer 322 is a pooling layer, the layer 323 is a convolutional layer, the layer 324 is a pooling layer, the layer 325 is a convolutional layer, and the layer 326 is a pooling layer. In another implementation, the layers 321 and 322 are convolutional layers, the layer 323 is a pooling layer, the layers 324 and 325 are convolutional layers, and the layer 326 is a pooling layer. In other words, an output of a convolutional layer may be used as an input of a following pooling layer, or may be used as an input of another convolutional layer, to continue to perform a convolution operation.

The following describes an internal operating principle of a convolutional layer by using the convolutional layer 321 as an example.

The convolutional layer 321 may include a plurality of convolution operators. The convolution operator is also referred to as a kernel. In data processing, the convolution operator functions as a filter that extracts specific information from an input data matrix. The convolution operator may be a weight matrix essentially, and the weight matrix is usually predefined.

Weight values in these weight matrices need to be obtained through a large amount of training in actual application. The weight matrices formed by using the weight values obtained after training may be used for extracting information from input data, to enable the convolutional neural network 300 to perform correct prediction.

When the convolutional neural network 300 has a plurality of convolutional layers, a relatively large quantity of general features are usually extracted at an initial convolutional layer (for example, 321). The general feature may also be referred to as a low-level feature. As a depth of the convolutional neural network 300 increases, a feature extracted at a subsequent convolutional layer (for example, 326) is more complex, for example, a high-level semantic feature. A feature with higher-level semantics is more applicable to a to-be-resolved problem.

Pooling layer:

A quantity of training parameters often needs to be reduced. Therefore, a pooling layer often needs to be periodically introduced after a convolutional layer. In the example layers 321 to 326 shown in 320 in FIG. 3, one convolutional layer may be followed by one pooling layer, or a plurality of convolutional layers may be followed by one or more pooling layers. During data processing, a sole purpose of the pooling layer is to reduce a space size of data.

Neural network layer 330:

After processing is performed by the convolutional layer/pooling layer 320, the convolutional neural network 300 still cannot output required output information. As described above, the convolutional layer/pooling layer 320 performs only feature extraction and reduces the parameters brought by the input data. However, to generate final output information (required class information or other related information), the convolutional neural network 300 needs to use the neural network layer 330 to generate outputs of one or a group of required classes. Therefore, the neural network layer 330 may include a plurality of hidden layers (331, 332, ..., and 33n shown in FIG. 3) and an output layer 340. Parameters included in the plurality of hidden layers may be obtained through pre-training based on related training data of a specific task type. For example, the task type may include recognition, classification, and the like.

A last layer of the entire convolutional neural network 300, that is, after the plurality of hidden layers in the neural network layer 330, is the output layer 340. The output layer 340 has a loss function similar to a classification cross entropy, which is specifically used to compute a prediction error. Once forward propagation of the entire convolutional neural network 300 (as shown in FIG. 3, propagation in a direction from 310 to 340 is forward propagation) is completed, the weight values and an error of each layer mentioned above are updated through backward propagation (as shown in FIG. 3, propagation in a direction from 340 to 310 is backward propagation), to reduce a loss of the convolutional neural network 300 and an error between a result output by the convolutional neural network 300 by using the output layer and an ideal result.

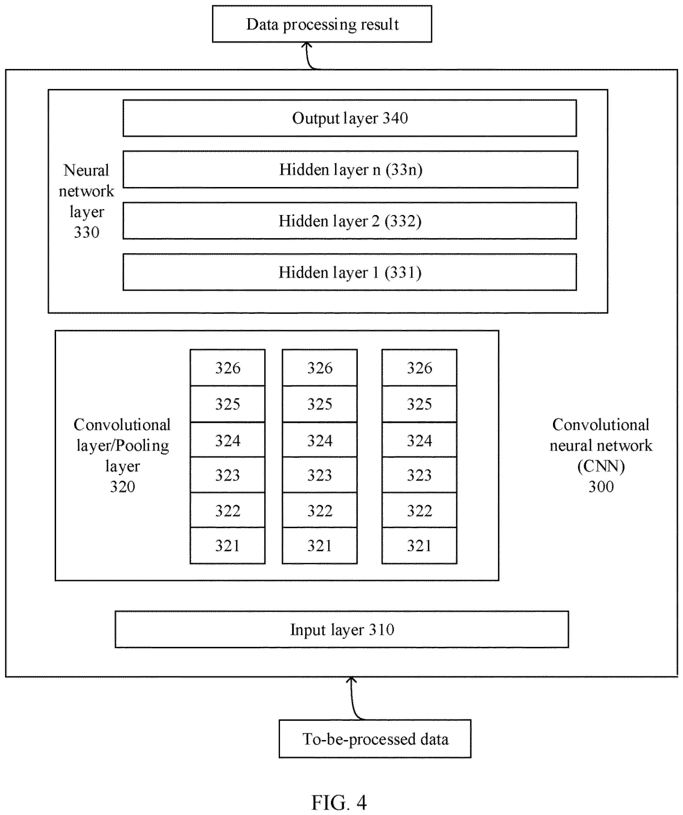

A structure of a neural network specifically used in a neural network graph slicing processing method in embodiments of this application may be shown in FIG. 4. In FIG. 4, the convolutional neural network (CNN) 300 may include the input layer 310, the convolutional layer/pooling layer 320 (the pooling layer is optional), and the neural network layer 330. Compared with FIG. 3, in FIG. 4, at the convolutional layer/pooling layer 320, a plurality of convolutional layers/pooling layers are in parallel, and extracted features are input into the neural network layer 330 for processing.

It should be noted that the convolutional neural networks shown in FIG. 3 and FIG. 4 are merely two possible example convolutional neural networks used in the neural network graph slicing method in embodiments of this application. In specific application, the convolutional neural network used in the neural network graph slicing method in embodiments of this application may alternatively exist in a form of another network model.

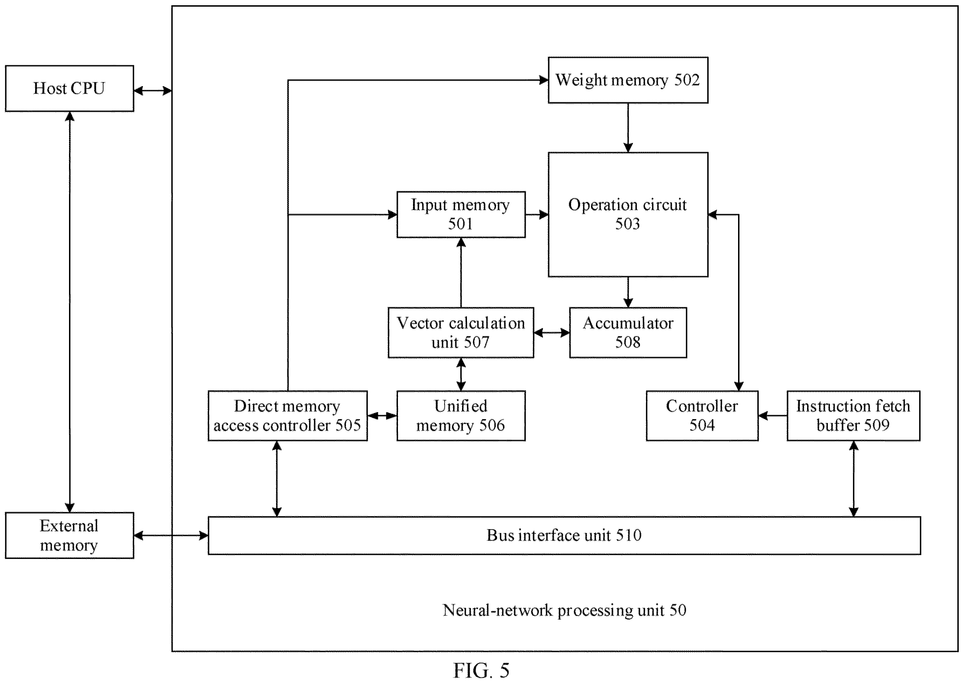

FIG. 5 is a diagram of a hardware architecture of a chip according to an embodiment of this application. The chip includes a neural-network processing unit 50. The chip may be disposed in the execution device 210 shown in FIG. 2 to complete calculation work of the calculation module 211. The chip may alternatively be disposed in the training device 220 shown in FIG. 2, to complete training work of the training device 220 and output the target model/rule 201. Algorithms at all layers of the convolutional neural network shown in FIG. 3 or FIG. 4 may be implemented in the chip shown in FIG. 5.

The neural-network processing unit NPU 50 is used as a coprocessor, and may be disposed on a host central processing unit (central processing unit, CPU) (host CPU). The host CPU assigns a task. A core part of the NPU is an operation circuit 503, and a controller 504 controls the operation circuit 503 to extract data in a memory (a weight memory or an input memory) and perform an operation.

In some implementations, the operation circuit 503 includes a plurality of process engines (process engine, PE) inside. In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there is an input matrix A, a weight matrix B, and an output matrix C. The operation circuit fetches, from a weight memory 502, data corresponding to the matrix B, and buffers the data on each PE in the operation circuit. The operation circuit fetches data of the matrix A from an input memory 501, to perform a matrix operation on the matrix B, and stores an obtained partial result or an obtained final result of the matrix in an accumulator (accumulator) 508.

A vector calculation unit 507 may perform further processing of vector multiplication, vector addition, an exponential operation, a logarithmic operation, value comparison, and the like on an output of the operation circuit. For example, the vector calculation unit 507 may be configured to perform network calculation, for example, pooling (pooling), batch normalization (batch normalization), or local response normalization (local response normalization) at a non-convolutional/non-FC layer in a neural network.

In some implementations, the vector calculation unit 507 can store a processed output vector in a unified memory 506. For example, the vector calculation unit 507 may apply a non-linear function to an output, for example, a vector of an accumulated value, of the operation circuit 503 to generate an activation value. In some implementations, the vector calculation unit 507 generates a normalized value, a combined value, or both a normalized value and a combined value. In some implementations, the processed output vector can be used as an activation input to the operation circuit 503, for example, used at a subsequent layer in the neural network.

The unified memory 506 is configured to store input data and output data.

For weight data, a direct memory access controller (direct memory access controller, DMAC) 505 directly transfers input data in an external memory to the input memory 501 and/or the unified memory 506, stores weight data in the external memory in the weight memory 502, and stores data in the unified memory 506 in the external memory.

A bus interface unit (bus interface unit, BIU) 510 is configured to implement interaction between the host CPU, the DMAC, and an instruction fetch buffer 509 through a bus.

The instruction fetch buffer (instruction fetch buffer) 509 connected to the controller 504 is configured to store instructions used by the controller 504.

The controller 504 is configured to invoke the instructions cached in the instruction fetch buffer 509, to control a working process of an operation accelerator.

Usually, the unified memory 506, the input memory 501, the weight memory 502, and the instruction fetch buffer 509 each are an on-chip (on-chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

An operation of each layer in the convolutional neural networks shown in FIG. 3 and FIG. 4 may be performed by the operation circuit 503 or the vector calculation unit 507.

The execution device 210 in FIG. 2 described above can perform steps of a data processing method in embodiments of this application. The CNN models shown in FIG. 3 and FIG. 4, and the chip shown in FIG. 5 may also be configured to perform steps of the neural network graph slicing method in embodiments of this application. The following describes the neural network graph slicing method in embodiments of this application with reference to the accompanying drawings.

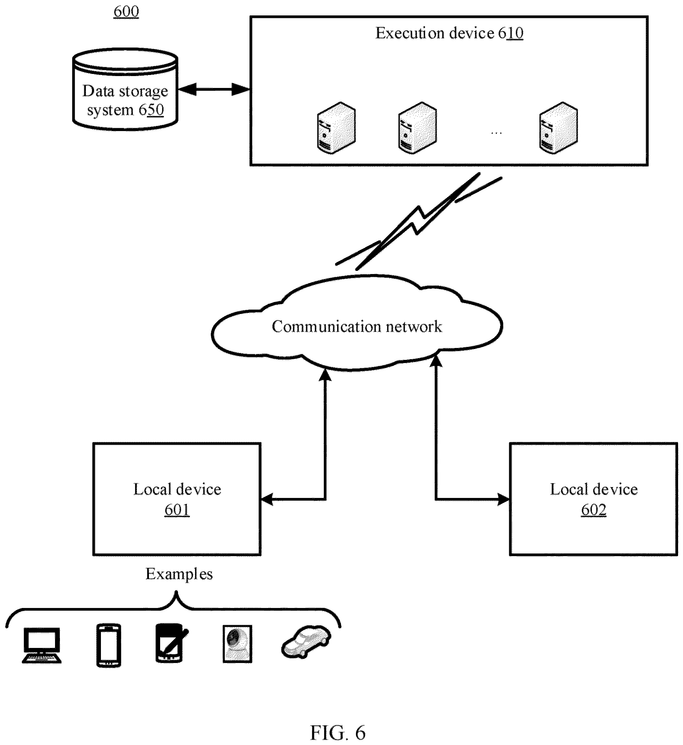

FIG. 6 shows a system architecture 600 according to an embodiment of this application. The system architecture includes a local device 601, a local device 602, an execution device 610, and a data storage system 650. The local device 601 and the local device 602 are connected to the execution device 610 through a communication network.

The execution device 610 may be implemented by one or more servers. Optionally, the execution device 610 may cooperate with another computing device, for example, a device like a data memory, a router, or a load balancer. The execution device 610 may be disposed on one physical site, or distributed on a plurality of physical sites. The execution device 610 may implement the neural network graph slicing method in embodiments of this application by using data in the data storage system 650 or by invoking program code in the data storage system 650.

A user may operate respective user devices (for example, the local device 601 and the local device 602), to interact with the execution device 610. Each local device may be any computing device like a personal computer, a computer workstation, a smartphone, a tablet computer, an intelligent camera, an intelligent vehicle, another type of cellular phone, a media consumption device, a wearable device, a set-top box, or a game console.

A local device of each user may interact with the execution device 610 through a communication network of any communication mechanism/communication standard. The communication network may be a wide area network, a local area network, a point-to-point connection, or any combination thereof.

In an implementation, the local device 601 and the local device 602 obtain a related parameter of a target neural network from the execution device 610, deploy the target neural network on the local device 601 and the local device 602, and perform data classification or recognition, or the like based on the target neural network.

In another implementation, a target neural network may be directly deployed on the execution device 610. The execution device 610 obtains to-be-processed data from the local device 601 and the local device 602, and performs classification or another type of data processing on the to-be-processed data based on the target neural network.

The execution device 610 may be a cloud device. In this case, the execution device 610 may be deployed on a cloud. Alternatively, the execution device 610 may be a terminal device. In this case, the execution device 610 may be deployed on a user terminal side. This is not limited in embodiments of this application.

Currently, when calculation processing is performed on a neural network graph, a tensor (tensor) of each node in the neural network graph is sliced, a head node in the neural network graph reads to-be-processed data from an off-chip memory, and a tail node stores a final result in an external memory. In addition, a plurality of intermediate nodes perform data exchange by reading and writing an on-chip buffer, thereby reducing a quantity of times of accessing an external memory and improving utilization of storage space.

However, in practice, a neural network graph slicing solution is strongly related to an operator type in the neural network graph, and a neural network graph usually has one or more slicing manners different from that of another neural network. In particular, different operators (in embodiments of this application, the operator may also be referred to as a node) in the neural network often have different formats (formats). Consequently, the neural network graph slicing solution cannot be simply expressed. Therefore, one neural network graph often corresponds to one slicing solution. When a new neural network graph appears, a new slicing solution needs to be customized. As a result, a customization attribute of the neural network graph slicing solution is excessively strong, and the slicing solution cannot be used in a slicing operation on another neural network graph. This restricts application and development of the neural network graph slicing solution.

In view of the foregoing technical problem, embodiments of this application provide a data processing method and apparatus, to enhance applicability of the neural network graph slicing solution, so that any neural network graph can be directly sliced.

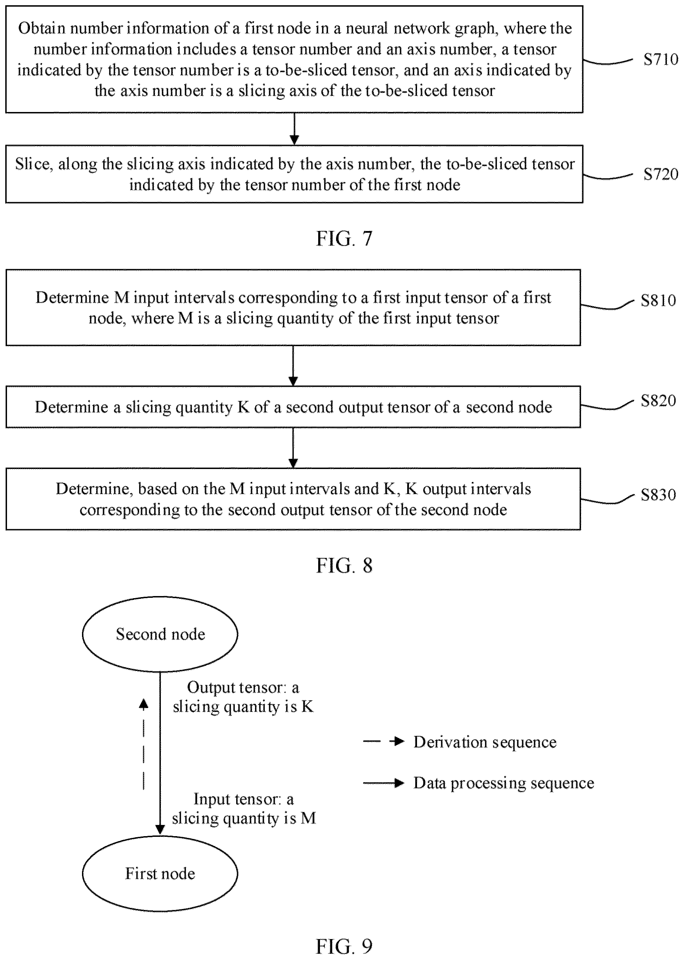

The following further describes the data processing method provided in an embodiment of this application with reference to FIG. 7.

FIG. 7 is a schematic flowchart of a data processing method according to an embodiment of this application. Details are shown in FIG. 7.

S710: Obtain number information of a first node in a neural network graph, where the number information includes a tensor number and an axis number, a tensor indicated by the tensor number is a to-be-sliced tensor, and an axis indicated by the axis number is a slicing axis of the to-be-sliced tensor.

S720: Slice, along the slicing axis indicated by the axis number, the to-be-sliced tensor indicated by the tensor number of the first node.

It should be understood that one neural network graph represents one neural network, and one node represents one calculation unit in the neural network graph. The first node is any node in a plurality of slicing nodes in the neural network graph. For example, the first node is a head node, a tail node, or an intermediate node in the plurality of slicing nodes in the neural network graph. Alternatively, the first node is any slicing node in the neural network graph, and the first node may be a head node, an intermediate node, or a tail node in the neural network graph. This is not limited in embodiments of this application.

It should be understood that one neural network graph includes a plurality of nodes (nodes), one node may be considered as a formula of one basic calculation, and a tensor (tensor) is input or output data of the formula. When one neural network graph has one or more input tensors, each node has one or more corresponding output tensors, and an output tensor of one node is an input tensor of a next node, or an output tensor of one node is used as an input of a next node.

It should be understood that in embodiments of this application, if the first node has five tensors, one tensor number is configured for each tensor of the first node. For example, tensor_idx=0, tensor_idx=1, tensor_idx=2, tensor_idx=3, and tensor_idx=4. tensor_idx=0 represents a first tensor of the first node, tensor_idx=1 represents a second tensor of the first node, tensor_idx=2 represents a third tensor of the first node, tensor_idx=3 represents a fourth tensor of the first node, and tensor_idx=4 represents a fifth tensor of the first node.

It should be understood that shapes of the tensors of the first node may be the same or different. For example, a shape of the first tensor is [2, 6, 3], a shape of the second tensor is [2, 6], a shape of the third tensor is [2, 6, 3, 10], a shape of the fourth tensor is [2, 6, 3, 20], and a shape of the fifth tensor is [2, 6, 3, 9, 10]. Therefore, in addition to that one tensor number is configured for each tensor of the first node, in embodiments of this application, one axis number is configured for each axis of each tensor of the first node. For example, {tensor_idx=0, axis=2} represents the first tensor of the first node and a third axis of the first tensor.

It should be understood that the five tensors of the first node may all be to-be-sliced tensors, or some of the tensors may be to-be-sliced tensors. It should be further understood that all axes of each tensor of the first node may be slicing axes, or some axes of each tensor of the first node may be slicing axes. This is specifically determined based on a scenario, and is not specifically limited in embodiments of this application.

It should be understood that, in embodiments of this application, when number information of each node in the neural network graph is annotated, a tensor number in the number information corresponds to one tensor, and an axis number corresponds to an axis of a tensor corresponding to the tensor number. However, when a node in the neural network graph is sliced, the tensor indicated by the tensor number in the number information obtained from the neural network graph by a data processing apparatus in embodiments of this application is the to-be-sliced tensor, and the axis indicated by the axis number is the slicing axis of the to-be-sliced tensor.

In a possible implementation, in an embodiment of this application, only a to-be-sliced tensor of each node in the neural network graph is numbered, and a slicing axis of the to-be-sliced tensor is numbered. Therefore, the tensor indicated by the tensor number in the number information is the to-be-sliced tensor, and the axis indicated by the axis number is the slicing axis of the to-be-sliced tensor.

For ease of describing the technical solutions in embodiments of this application, in embodiments of this application, the tensor indicated by the tensor number is the to-be-sliced tensor, and the axis indicated by the axis number is the slicing axis of the to-be-sliced tensor. However, this description is not limited.

Specifically, in a specific slicing process, the data processing apparatus in embodiments of this application obtains the number information of the first node, to determine which tensor of the first node is the to-be-sliced tensor of the first node, and determine which axis of the to-be-sliced tensor is the slicing axis of the to-be-sliced tensor.

It should be noted that, in embodiments of this application, one tensor number is separately configured for some or all tensors in all tensors of each node in the neural network graph, and one axis number is separately configured for some or all axes in all axes of each tensor. However, that the axis indicated by the tensor number is the to-be-sliced tensor is generally true in the slicing process. The number information of the first node obtained by the data processing apparatus in embodiments of this application in the slicing process is used to determine which tensor is the to-be-sliced tensor of the first node and which slicing axis is the slicing axis of the to-be-sliced tensor. In addition, the tensor of the first node is sliced based on the number information.

It should be understood that, in embodiments of this application, the number information of each node in the neural network graph is annotated in the neural network graph. Specifically, the annotating process may be as follows.

The neural network graph may be understood as a diagram that is obtained by serializing an operator instance and a corresponding attribute (attribute) and that includes a topology relationship. Slicing information (in embodiments of this application, the number information may also be understood as the slicing information) may be understood as an inherent attribute of an operator. The slicing information may be annotated in a character string manner on the operator instance as the attribute (attribute) by setting a fixed format of the slicing information. The fixed format may facilitate parsing in the actual slicing process.

It should be understood that, in embodiments of this application, types of all of a plurality of slicing nodes in the neural network graph may be different, or may be the same, or some slicing nodes may be of a same type. When there are the plurality of slicing nodes in the neural network graph, the neural network graph further includes at least one piece of number information corresponding to each slicing node, and there may be at least one piece of same number information between number information corresponding to different slicing nodes, or the number information corresponding to different slicing nodes is all different. For example, the first node corresponds to three pieces of number information: number information A, B, and C, and a second node corresponds to three pieces of number information: number information A, C, and D. In this case, both the first node and the second node correspond to one piece of same number information A.

Specifically, the data processing apparatus in embodiments of this application may obtain one or more pieces of number information of the first node in the neural network graph. For example, when there are two pieces of number information, for example, {tensor_idx=2, axis=2}, {tensor_idx=4, axis=0}, this represents that the data processing apparatus in embodiments of this application needs to separately slice tensors indicated by corresponding tensor numbers in the two pieces of number information. However, it should be understood that, regardless of a quantity of pieces of number information obtained by the data processing apparatus, the data processing apparatus specifically executes consistent methods, that is, determines which to-be-sliced tensor is the to-be-sliced tensor of the first node based on the tensor number in the number information, and slices the to-be-sliced tensor based on the axis indicated by the axis number in the number information, to obtain at least two subtensors.

It should be understood that there may be a plurality of pieces of number information of the first node. For example, when there are two tensors of the first node, and axes of each tensor are two, in other words, a shape of a first tensor is [2, 16], and a shape of a second tensor is [2, 56], there are four pieces of number information corresponding to the first node. Details are as follows:

$$\text{first number information} = \{\text{tensor\_idx}=0,\ \text{axis}=[0]\};$$

$$\text{second number information} = \{\text{tensor\_idx}=0,\ \text{axis}=[1]\};$$

$$\text{third number information} = \{\text{tensor\_idx}=1,\ \text{axis}=[0]\};$$

and

$$\text{fourth number information} = \{\text{tensor\_idx}=1,\ \text{axis}=[1]\}.$$

tensor_idx=0 represents the first tensor of the first node, and tensor_idx=1 represents the second tensor of the first node. axis=[0] represents a first slicing axis of the corresponding to-be-sliced tensor, and axis=[1] represents a second slicing axis of the corresponding to-be-sliced tensor.

Specifically, the first number information indicates that a tensor whose tensor number is 0 is the to-be-sliced tensor, and the slicing axis is an axis indicated by the axis number 0. The second number information indicates that a tensor whose tensor number is 0 is the to-be-sliced tensor, and the slicing axis is an axis indicated by the axis number 1. The third number information indicates that a tensor whose tensor number is 1 is the to-be-sliced tensor, and the slicing axis is an axis indicated by the axis number 0. The fourth number information indicates that a tensor whose tensor number is 1 is the to-be-sliced tensor, and the slicing axis is an axis indicated by the axis number 1.

Generally, the quantity of pieces of number information is associated with a quantity of tensors of the first node. Axis numbers in each piece of number information may be uniform, but axes specifically indicated by the uniform axis numbers may be different. For example, the axis number of the first tensor is 0, which represents that the first tensor is sliced along a first axis of the first tensor, and the 0 axis may indicate an H axis of the first tensor. The axis number of the second tensor is 0, which represents that the second tensor is sliced along a first axis of the second tensor, and the 0 axis may indicate a W axis of the second tensor. An axis number of a third tensor is 0, which represents that the third tensor is sliced along a first axis of the third tensor, and the 0 axis may indicate an N axis of the third tensor. Therefore, a plurality of pieces of number information may correspond to one uniform axis number. In other words, axis numbers included in different number information are the same, but for different tensors, a same axis number may indicate different slicing axes. A specific meaning of the axis number is related to a shape of a corresponding tensor.

It should be understood that one piece of number information represents slicing of one tensor of the first node. A tensor number included in the number information indicates which tensor needs to be sliced, an axis number indicates which slicing axis is a slicing axis of the to-be-sliced tensor, and the tensor is sliced along the slicing axis indicated by the axis number.

Specifically, the first node corresponds to at least one piece of number information, and different number information represents different slicing manners of the first node. For example, when the first node is a convolution operator, a same tensor of the first node may correspond to four slicing manners, and each piece of number information represents one slicing manner of the first node, in other words, one piece of number information represents one slicing policy of the first node.

It should be understood that, in embodiments of this application, the tensor indicated by the tensor number in the number information may be an input tensor of the first node, or may be an output tensor of the first node. For example, when the tensor indicated by the tensor number in the number information is the output tensor of the first node, the output tensor is sliced along the axis indicated by the axis number in the number information. Correspondingly, the input tensor that is of the first node and that corresponds to the output tensor is sliced in a same manner. For example, the output tensor is sliced along a slicing axis indicated by an axis number of the output tensor. Correspondingly, the input tensor corresponding to the output tensor is also sliced along a corresponding slicing axis of the input tensor. For another example, when the tensor indicated by the tensor number in the number information is the input tensor of the first node, the input tensor is sliced along the axis indicated by the axis number in the number information. Correspondingly, the output tensor that is of the first node and that corresponds to the input tensor is sliced in a same manner. For example, the input tensor is sliced along a slicing axis indicated by an axis number of the input tensor. Correspondingly, the output tensor corresponding to the input tensor is also sliced along a corresponding slicing axis of the output tensor. Therefore, in embodiments of this application, the tensor of the first node may be the input tensor of the first node, or may be the output tensor of the first node. However, when the input tensor of the first node is sliced, the output tensor corresponding to the input tensor is also sliced in the same manner.

In a possible implementation, different number information corresponding to the first node may be combined together. For example, in embodiments of this application, the data processing apparatus obtains a number information group of the first node. The number information group includes at least two pieces of number information, and tensors indicated by tensor numbers in different number information are different. For example, the number information group includes the first number information and the second number information, and the tensor indicated by the tensor number in the first number information is different from the tensor indicated by the tensor number in the second number information. In this way, in embodiments of this application, simultaneous slicing or ordered slicing of different tensors may be completed.

The number information of each node is annotated in the neural network graph, and the number information corresponding to each node is decoupled from a specific type and a specific operation of each node. In this way, in a case in which the number information is decoupled from the specific type and the specific operation of the node, when any specific neural network graph is sliced, the technical solution in embodiments of this application is used, in other words, number information of each node in the any specific neural network graph is annotated in the neural network graph, and the neural network graph is sliced. In this way, in embodiments of this application, node slicing of the any neural network graph can be implemented, and applicability of a neural network graph slicing solution can be improved. In addition, network slicing implemented based on the number information can perfectly replace a conventional slicing method that requires a human to analyze a network. Because a process is completely automatic, a slicing manner with optimal performance can be found through a plurality of attempts by neural network slicing implemented based on the number information. This greatly improves efficiency and performance benefit of the neural network graph slicing, and promotes application and development of the neural network graph slicing solution.

In a possible implementation, when the to-be-sliced tensor is the input tensor of the first node, the number information further includes an indication value, and the indication value indicates whether adjacent subtensors obtained by slicing the to-be-sliced tensor along the slicing axis overlap.

It should be understood that the adjacent subtensors obtained by slicing the to-be-sliced tensor along the slicing axis may or may not overlap (overlap). This depends on a type of the slicing axis of the to-be-sliced tensor. For example, the first node is the convolution operator, and a four-dimensional tensor of the first node includes four slicing axes (for example, H/N/W/C). The slicing axes H and W overlap, and the slicing axes N and C do not overlap.

Specifically, the indication value may be a specific numeric value, for example, 0, 1, or -1, or the indication value may be a letter, for example, a or c.

For example, when the indication value is 0, the indication value indicates that the adjacent subtensors obtained by slicing the to-be-sliced tensor along the slicing axis indicated by the axis number overlap. Alternatively, when the indication value is 1, the indication value indicates that the adjacent subtensors obtained by slicing the to-be-sliced tensor along the slicing axis indicated by the axis number overlap. Alternatively, when the indication value is a, the indication value indicates that the adjacent subtensors obtained by slicing the to-be-sliced tensor along the slicing axis indicated by the axis number overlap. For another example, when the indication value is 0, the indication value indicates that the adjacent subtensors obtained by slicing the to-be-sliced tensor along the slicing axis indicated by the axis number do not overlap. Alternatively, when the indication value is 1, the indication value indicates that the adjacent subtensors obtained by slicing the to-be-sliced tensor along the slicing axis indicated by the axis number do not overlap. Alternatively, when the indication value is a, the indication value indicates that the adjacent subtensors obtained by slicing the to-be-sliced tensor along the slicing axis indicated by the axis number do not overlap.

Example expression forms in which the number information carries the indication value are described below. Details are as follows:

$$\text{number information 1\{tensor\_idx=0, axis=[0]\};}$$

$$\text{number information 2 \{tensor\_idx=1, axis=[1], overlap=[-1]\};}$$

$$\text{number information 3 \{tensor\_idx=2, axis=[1], overlap=[1]\};}$$

and

$$\text{number information 4\{tensor\_idx=3, axis=[1]\}.}$$

Specifically, a tensor indicated by a tensor number in the number information 1 is the output tensor of the first node. Therefore, the number information 1 does not need to carry the indication value. A tensor indicated by a tensor number in the number information 2 is the input tensor of the first node. Therefore, the number information 2 needs to carry the indication value. A tensor indicated by a tensor number in the number information 3 is the output tensor of the first node. Therefore, the number information 3 needs to carry the indication value. A tensor indicated by a tensor number in the number information 4 is the output tensor of the first node. Therefore, the number information 4 does not need to carry the indication value. overlap=[1] represents that the adjacent subtensors obtained by slicing, along the slicing axis indicated by the axis number, the to-be-sliced tensor indicated by the tensor number overlap. overlap=[-1] represents that the adjacent subtensors obtained by slicing, along the slicing axis indicated by the axis number, the to-be-sliced tensor indicated by the tensor number do not overlap.

For another example, overlap=[1] may represent that the adjacent subtensors corresponding to the slicing axis do not overlap. overlap=[-1] represents that the adjacent subtensors obtained by slicing, along the slicing axis indicated by the axis number, the to-be-sliced tensor indicated by the tensor number overlap.

The indication value is carried in the number information. The data processing apparatus in embodiments of this application flexibly selects the number information when slicing the node in the neural network graph. Because data may overlap after axes of some operators are sliced, an amount of data is increased, and the performance benefit is reduced. In embodiments of this application, number information that does not overlap is preferentially selected.

In a possible implementation, the number information further includes an indication value, and the indication value indicates whether adjacent subtensors obtained by slicing the to-be-sliced tensor along the slicing axis overlap.

Specifically, regardless of whether the tensor indicated by the tensor number in the number information is the input tensor or the output tensor of the first node, the number information further carries the indication value. The indication value is carried in the number information. The data processing apparatus in embodiments of this application can determine whether axes indicated by axis numbers in the number information correspondingly overlap, and number information that does not overlap is preferentially selected.

For example, example expression forms in which the number information carries the indication value are:

number information #1 {tensor_idx=0, axis=[0], overlap=[1]};

number information #2 {tensor_idx=1, axis=[1], overlap=[−1]};

number information #3 {tensor_idx=2, axis=[1], overlap=[1]};

and

number information #4 {tensor_idx=3, axis=[1], overlap=[1]}.

Specifically, a tensor indicated by a tensor number in the number information #1 is the output tensor or the input tensor of the first node. A tensor indicated by a tensor number in the number information #2 is the input tensor or the output tensor of the first node. A tensor indicated by a tensor number in the number information #3 is the output tensor or the input tensor of the first node. A tensor indicated by a tensor number in the number information #4 is the output tensor or the input tensor of the first node.

In a possible implementation, when the to-be-sliced tensor is the input tensor of the first node, the indication value indicates that the adjacent subtensors obtained by slicing the to-be-sliced tensor along the slicing axis overlap; when the to-be-sliced tensor is the input tensor of the first node, the indication value indicates that the adjacent subtensors obtained by slicing the to-be-sliced tensor along the slicing axis do not overlap; or when the to-be-sliced tensor is the output tensor of the first node, the indication value indicates that the adjacent subtensors obtained by slicing the to-be-sliced tensor along the slicing axis do not overlap.

For example, when the tensor indicated by the tensor number in the number information #1 is the output tensor of the first node, overlap=[1] represents that overlapping does not exist. When the tensor indicated by the tensor number in the number information #2 is the input tensor of the first node, overlap=[-1] represents that overlapping exists. When the tensor indicated by the tensor number in the number information #3 is the input tensor of the first node, overlap=[1] represents that overlapping does not exist. When the tensor indicated by the tensor number in the number information #4 is the output tensor of the first node, overlap=[1] represents that overlapping does not exist.

It should be noted that in embodiments of this application, specific number values of the tensor number and the axis number in the number information may be expressed in a numeric form, a letter form, or in another manner. This is not specifically limited in embodiments of this application.

The indication value is carried in the number information. The data processing apparatus in embodiments of this application flexibly selects the number information when slicing the node in the neural network graph, and can select a slicing solution with best performance through the plurality of attempts, to achieve maximum performance benefit.

It should be understood that after the tensor of the first node in the neural network graph is sliced, due to particularity of an operator of a sliding window type in the neural network, additional data dependency is generated after the operator is sliced (for example, after an operator of a forward convolution type is sliced in H and W directions, input data usually depends on more data at both ends of the corresponding directions). Because an input/output data dependency relationship of the sliced operator changes, a data dependency relationship between a plurality of subtensors corresponding to the tensor of the first node also changes. If corresponding correction is not performed on a tensor attribute obtained after slicing is performed, unexpected results (including but not limited to that a calculation result is abnormal, training cannot be converged, and the like) may occur. Because there are a large quantity of deep neural network layers, a multi-layer data dependency change caused by the slicing may bring more severe consequences, resulting in a severe loss of neural network precision, and calculation cannot be supported.

In view of the technical problem, an embodiment of this application provides another data processing method. In an example of this application, based on a slicing feature (output data is consistent with original data after concatenation), tensor attributes obtained after slicing is performed are updated layer by layer by reversely deriving data dependency. In this method, a problem that a concatenated output result of each of a plurality of slicing nodes is inconsistent with original input data is resolved.

The following further describes the another data processing method provided in an embodiment of this application with reference to FIG. 8.

S810: Determine M input intervals corresponding to a first input tensor of a first node, where M is a slicing quantity of the input tensor of the first node.

S820: Obtain a slicing quantity K of a second output tensor of a second node.

S830: Determine, based on the M input intervals and K, K output intervals corresponding to the second output tensor of the second node.

Specifically, in an embodiment of this application, one interval represents a data range of one subtensor obtained after a tensor of one node is sliced. For example, a shape of the first input tensor of the first node is [2, 6, 16, 3]. In an embodiment of this application, an interval represents the input tensor of the first node, that is, an expression form of the first input tensor is [0 1 0 5 0 15 0 2]. Every two numbers represent an interval corresponding to one slicing axis. For example, [0 1] represents an interval corresponding to a first slicing axis of the first input tensor, [0 5] represents an interval corresponding to a second slicing axis of the first input tensor, [0 15] represents an interval corresponding to a third slicing axis of the first input tensor, and [0 2] represents an interval corresponding to a fourth slicing axis of the input tensor. When the input tensor is sliced along a slicing axis, only an interval expression corresponding to the slicing axis is changed. For example, slicing is performed along the third slicing axis of the first input tensor, to obtain four subtensors (that is, the slicing quantity of the first input tensor is 4). An interval of a first subtensor is [0, 4] (a shape is [2, 6, 5, 3]), an interval of a second subtensor is [5, 8] (a shape is [2, 6, 4, 3]), an interval of a third subtensor is [9, 12] (a shape is [2, 6, 4, 3]), and an interval of a fourth subtensor is [13, 15] (a shape is [2, 6, 3, 3]). In other words, the first input tensor of the first node corresponds to the four input intervals, and one input interval corresponds to one subtensor of the first input tensor.

It should also be understood that, when adjacent intervals of the four input intervals corresponding to the first input tensor of the first node overlap, the interval of the first subtensor is [0, 4] (the shape is [2, 6, 5, 3]), the interval of the second subtensor is [2, 8] (the shape is [2, 6, 7, 3]), the interval of the third subtensor is [7, 12] (the shape is [2, 6, 6, 3]), and the interval of the fourth subtensor is [10, 15] (the shape is [2, 6, 6, 3]). A data range of each subtensor of the first input tensor is represented by using an interval. In embodiments of this application, whether adjacent subtensors overlap is numerically represented (the subtensor may also be referred to as a subnode or slice), and offset calculation of the subtensor in a complex neural network graph slicing process can be simplified.

It should be understood that the second node is an upper-level node of the first node, which indicates that the second node is located before the first node in a data processing sequence. For details, refer to a diagram of a relationship between the second node, a third node, and the first node shown in FIG. 9. It should be understood that a solid-line arrow shown in FIG. 9 refers to the data processing sequence, and a dashed-line arrow indicates a derivation sequence.

Specifically, the output tensor of the second node is the input tensor of the first node. After the M input intervals corresponding to the first input tensor of the first node are determined, and the slicing quantity K of the second output tensor of the second node is obtained, the K output intervals corresponding to the second output tensor of the second node may be determined based on the M input intervals and K. In addition, all output intervals one-to-one correspond to all subtensors of the output tensor of the second node.

For example, the four input intervals corresponding to the first input tensor of the first node are: [0, 4], [5, 8], [9, 12], and [13, 15], and the slicing quantity of the second output tensor of the second node is 2. Two output intervals corresponding to the second output tensor of the second node are determined based on the four input intervals and the slicing quantity 2. For example, two input intervals [0, 4] and [5, 8] of the first node are aggregated into an interval [0, 8], and the other two input intervals [9, 12] and [13, 15] of the first node are aggregated into an interval [9, 15]. Alternatively, the four input intervals corresponding to the first input tensor of the first node are aggregated into one interval, that is, [0, 15], and the new interval is divided into two intervals, to respectively obtain [0, 8] and [9, 15], [0. 6] and [7, 15], or the like. This is not specifically limited in embodiments of this application.

It should be noted that, in the technical solution shown in FIG. 8, the first input tensor of the first node and the second output tensor of the second node actually exist in a form of subtensors rather than a form of unsliced tensors. In other words, the first input tensor of the first node corresponds to M subtensors after the first input tensor is sliced, and all subtensors one-to-one correspond to all input intervals. The second output tensor of the second node corresponds to K subtensors after the second output tensor is sliced, and all subtensors one-to-one correspond to all output intervals.

Specifically, the first input tensor of the first node is a concept in which the tensor is sliced. In addition, the solution shown in FIG. 8 is a technical solution determined through derivation of a data dependency relationship between subtensors of each slicing node after a neural network graph is sliced. Therefore, in a derivation process, the first input tensor of the first node exists in the form of the subtensor rather than the form of the unsliced tensor, and the same is true for the output tensor of the second node.

The K output intervals corresponding to the output tensor of the second node are determined in a reverse derivation manner based on the M input intervals corresponding to the input tensor of the first node and the slicing quantity K of the output tensor of the second node, and the K output intervals are expressed in a form of intervals. In this manner, in embodiments of this application, slicing and aggregation (no matter in parallel computing or in-core (core) buffer (buffer) optimization scenarios, aggregation of slicing represents an end of one optimization action, and in these scenarios, usually, a longer optimization action brings more obvious performance benefit) caused when different slicing quantities exist in a neural network can be resolved. Therefore, effect of neural network slicing can be improved to some extent according to this solution.

In a possible implementation, the determining, based on the M input intervals and the slicing quantity K, K output intervals corresponding to the second output tensor of the second node includes:

if M is greater than K, aggregating the M input intervals into the K output intervals;
if M is equal to K, performing one-to-one correspondence on the M input intervals and the K output intervals; or
if M is smaller than K, dividing the M input intervals into the K output intervals.

Specifically, when M is greater than K, for example, M=4, and K=2, the four input intervals of the first node need to be aggregated into two output intervals. An aggregation manner includes: (1) aggregating a first input interval and a second input interval of the four input intervals into one output interval, and aggregating a third input interval and a fourth input interval into one output interval; (2) aggregating the four input intervals into one interval, and dividing the new interval into two output intervals; or (3) aggregating a first input interval and a third input interval of the four input intervals into one interval, and aggregating a second input interval and a fourth input interval into one interval. When M=K, the M input intervals one-to-one correspond to the K output intervals. To be specific, a first input interval corresponds to a first output interval, a second input interval corresponds to a second output interval, a third input interval corresponds to a third output interval, and a fourth input interval corresponds to a fourth output interval. When M is less than K, for example, M=4, and K=8, the four input intervals of the first node need to be divided into eight output intervals. A division manner may include: (1) dividing a first input interval of the four input intervals into two output intervals, dividing a second input interval into two output intervals, dividing a third input interval into two output intervals, and dividing a fourth input interval into two output intervals; (2) aggregating the four input intervals into one interval, and dividing the new interval into eight output intervals; or (3) dividing a first input interval of the four input intervals into three output intervals, dividing a second input interval into two output intervals, dividing a third input interval into two output intervals, and not dividing a fourth input interval and using the fourth input interval as one corresponding output interval.

It should be understood that, in the foregoing solution, manners such as division and aggregation may be even division and aggregation, or may be non-even division and aggregation.

In a possible implementation, the determining M intervals corresponding to a first input tensor of a first node includes:

determining M output intervals corresponding to a first output tensor of the first node, where M is a slicing quantity corresponding to the first output tensor of the first node; and
performing reverse derivation on the M output intervals corresponding to the first output tensor of the first node, to determine the M input intervals corresponding to the first input tensor of the first node.

Specifically, after the first output tensor of the first node and the slicing quantity M corresponding to the first output tensor are determined, an interval corresponding to the first output tensor is divided into M intervals, and all intervals one-to-one correspond to subtensors of the first output tensor. The M input intervals corresponding to the first input tensor of the first node are determined through reverse derivation. For example, if a shape of the first output tensor of the first node is [2, 6, 16, 3], and the slicing quantity of the first output tensor of the first node is 2 (a slicing axis is a third axis of the first output tensor), an interval corresponding to the first output tensor of the first node is expressed in a form of [0, 15], the interval is divided, based on the slicing quantity 2, into two intervals: [0, 7] and [8, 15], and two intervals of the first input tensor corresponding to the first input tensor of the first node are obtained through reverse derivation: [0, 7] and [8, 15]. When adjacent subtensors of the first input tensor of the first node overlap, and an overlap value is 1, correspondingly, the two intervals corresponding to the first input tensor of the first node are [0, 8] and [7, 15].

The M input intervals corresponding to the input tensor of the first node are determined in the reverse derivation manner. In embodiments of this application, a plurality of output intervals corresponding to the output tensor of the second node can be determined based on the M input intervals. In this way, data group dependency is completed, forced data aggregation is avoided, and the performance benefit brought by the neural network slicing can be improved.

To better understand the foregoing solution, in an embodiment of this application, an example in which the first node is a tail node in the neural network graph and adjacent subtensors of input tensors of all nodes overlap is used to further describe the solution.

For example, one neural network graph includes four nodes, which are respectively a fourth node, a third node, a second node, and a first node from top to bottom. The first node is a tail node in the neural network graph, the fourth node is a head node in the neural network graph, and the second node and the third node are intermediate nodes in the neural network graph. A slicing quantity of the first node is 2, a slicing quantity of the second node is 4, a slicing quantity of the third node is 4, and a slicing quantity of the fourth node is 2.

A shape of an output tensor of the first node is [2, 6, 16, 3], a slicing quantity of the output tensor of the first node is 2, and the output tensor of the first node needs to be divided into two subtensors: a first subtensor and a second subtensor. A shape of the first subtensor is [2, 6, 8, 3] (an interval is [0, 7]), and a shape of the second subtensor is [2, 6, 8, 3] (an interval is [8, 15]). A slicing axis of the first node is a third slicing axis of a to-be-sliced tensor. After it is determined that the output tensor of the first node is divided into the two output subtensors (or two output intervals are obtained), a data processing apparatus in embodiments of this application obtains, through reverse derivation, two input subtensors of the first node, that is, output subtensors of the second node (or two input intervals are obtained).

Because adjacent subtensors obtained after the to-be-sliced tensor of the first node is sliced along the slicing axis overlap, it is assumed that an overlap value between the adjacent subtensors is 1. The two input subtensors of the first node are [2, 6, 9, 3] (an interval is [0, 8]) and [2, 6, 9, 3] (an interval is [7, 15]). When the output tensor of the second node is derived, because the slicing quantity of the output tensor of the second node is 4, and the slicing quantity of the output tensor of the first node is 2, the two input subtensors of the first node need to be separately divided into two subtensors: [2, 6, 9, 3] (an interval is [0, 8])→[2, 6, 5, 3] (an interval is [0, 4]) and [2, 6, 4, 3] (an interval is [5, 8]), and [2, 6, 9, 3] (an interval is [7, 15])→[2, 6, 5, 3] (an interval is [7, 11]) and [2, 6, 4, 3] (an interval is [12, 15]). However, due to the overlapping, shapes finally corresponding to the four output subtensors of the second node are [2, 6, 6, 3] (an interval is [0, 5]), [2, 6, 6, 3] (an interval is [4, 9]), [2, 6, 7, 3] (an interval is [6, 12]), and [2, 6, 5, 3] (an interval is [11, 15]). Because the slicing quantity of the second node is the same as the slicing quantity of the third node, each input subtensor of the second node may be assigned to each output subtensor of an output tensor of the third node, and no further slicing is required. Based on the foregoing content, four input subtensors of the third node are [2, 6, 7, 3] (an interval is [0, 6]), [2, 6, 8, 3] (an interval is [3, 10]), [2, 6, 9. 3] (an interval is [5, 13]), and [2, 6, 6, 3] (an interval is [10, 15]). Because the slicing quantity of the fourth node is 2, and the slicing quantity of the third node is 4, the four input subtensors of the third node need to be aggregated into two output subtensors: [2, 6, 7, 3] (an interval is [0, 6])+[2, 6, 8, 3] (an interval is [3, 10])4 [2, 6, 11, 3] (an interval is [0, 10]), and [2, 6, 9, 3] (an interval is [5, 13])+[2, 6, 6, 3] (an interval is [10, 15])4[2, 6, 11, 3] (an interval is [5, 15]). Subsequently, two input subtensors of the fourth node are [2, 6, 12, 3] (an interval is [0, 11]) and [2, 6, 12, 3] (an interval is [4, 15]).

In an example, the first node is the tail node in the neural network graph. The data processing apparatus in embodiments of this application first obtains slicing quantity information of each node in the neural network graph in a traversal manner, determines the output tensor of the first node and the slicing quantity of the output tensor of the first node, and obtains an output tensor of an upper-level node of the first node according to the foregoing solution. The first node is an upper-level node of the tail node in the neural network graph, and on a premise that an output tensor of the tail node in the neural network graph is determined, an input tensor of the upper-level node of the tail node is obtained through reverse derivation according to the foregoing method. If the first node is the intermediate node in the neural network graph, on the premise that the output tensor of the tail node in the neural network graph is determined, when the output tensor of the upper-level node of the tail node is obtained through reverse derivation according to the foregoing method, in embodiments of this application, the M input intervals corresponding to the input tensor of the first node are further obtained through cyclic reverse derivation.

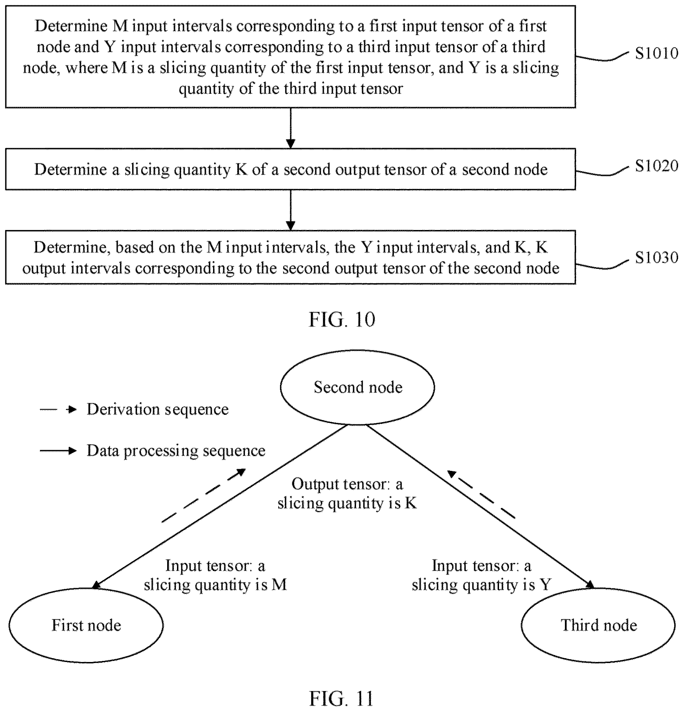

FIG. 10 shows still another data processing method according to an embodiment of this application. Specific content is shown in FIG. 10.

S1010: Determine M input intervals corresponding to a first input tensor of a first node and Y input intervals corresponding to a third input tensor of a third node.

S1020: Obtain a slicing quantity K of a second node.

S1030: Determine, based on the M input intervals, the Y input intervals, and K, K output intervals corresponding to a second output tensor of the second node.

Specifically, the second node is an upper-level node of the first node, and the second node is also an upper-level node of the third node. In other words, the first node, the second node, and the third node all belong to a same neural network graph.

It should be understood that the output tensor of the second node is an input tensor of the first node, and is also an input tensor of the third node. For details, refer to a diagram of a relationship between the second node, the third node, and the first node shown in FIG. 11. It should be understood that a solid-line arrow shown in FIG. 11 refers to a data processing sequence, and a dashed-line arrow indicates a derivation sequence.

It should be understood that in an embodiment of this application, when a plurality of output intervals corresponding to the second output tensor of the second node are reversely derived based on a plurality of input intervals corresponding to an input tensor of a lower-level node of the second node, derivation is performed by using two branches. To be specific, two output intervals corresponding to the second output tensor of the second node are reversely derived based on four input intervals corresponding to the first input tensor of the first node, and two output intervals corresponding to the second output tensor of the second node are reversely derived based on six input intervals corresponding to the third input tensor of the third node. However, a branch line between the first node and the second node and a branch line between the third node and the second node converge at the second node. Therefore, to finally determine the two output intervals corresponding to the second output tensor of the second node, in an embodiment of this application, union set processing is performed on two corresponding output intervals of four output intervals, for example, the two output intervals that are determined based on the four input intervals of the first node and that correspond to the second output tensor of the second node and the two output intervals that are determined based on the six input intervals of the third node and that correspond to the second output tensor of the second node. The final two output intervals corresponding to the second output tensor of the second node are determined.

For example, a slicing quantity of the first input tensor of the first node is 4, a slicing quantity of the third input tensor of the third node is 6, and the slicing quantity of the second output tensor of the second node is 2. The two output intervals that are determined based on the four input intervals (for example, [0,6], [3,10], [5,13], and [10,15]) of the first node and that correspond to the second output tensor of the second node are: [0, 10] and [5, 15]. The two output intervals that are determined based on the six input intervals (for example, [0, 3], [2, 6], [5, 9], [6, 10], [9, 13], and [12, 15]) of the third node and that correspond to the second output tensor of the second node are: [0, 9] and [6, 15]. A union set of the intervals [0, 10] and [0, 9] is obtained, namely, the interval [0, 10], and a union set of the intervals [5, 15] and [6, 15] is obtained, namely, the interval [5, 15]. Alternatively, the two output intervals that are determined based on the four input intervals of the first node and that correspond to the second output tensor of the second node are: [0, 9] and [5, 15]. The two output intervals that are determined based on the six input intervals of the third node and that correspond to the second output tensor of the second node are: [0, 10] and [6, 15]. A union set of the intervals [0, 9] and [0, 10] is obtained, namely, the interval [0, 10], and a union set of the intervals [5, 15] and[6, 15] is obtained, namely, the interval [5, 15].

It should be understood that, for a specific process of determining, based on the M input intervals corresponding to the first input tensor of the first node, the K output intervals corresponding to the second output tensor of the second node, refer to the foregoing description. Details are not described herein again.

According to the foregoing technical solution, when the second node corresponds to a plurality of lower-level nodes, and a plurality of different output intervals corresponding to output tensors of the second node are obtained by using different branch lines, a union set corresponding to two intervals is obtained through derivation by using different branch lines, and the plurality of output intervals corresponding to the output tensor of the second node are finally determined. In this way, a problem that the plurality of lower-level nodes cannot obtain complete data can be avoided in embodiments of this application. Because the obtained data is a union set of intervals of the lower-level nodes, it can be ensured that each lower-level node can obtain a data block size required by the lower-level node. This avoids a case that is caused by data stomping and in which a neural network inference result is abnormal or training cannot be converged.

It should be noted that the foregoing solution may be further applied to a scenario like parallel data computing, and a solution of the scenario is consistent with the foregoing solution.

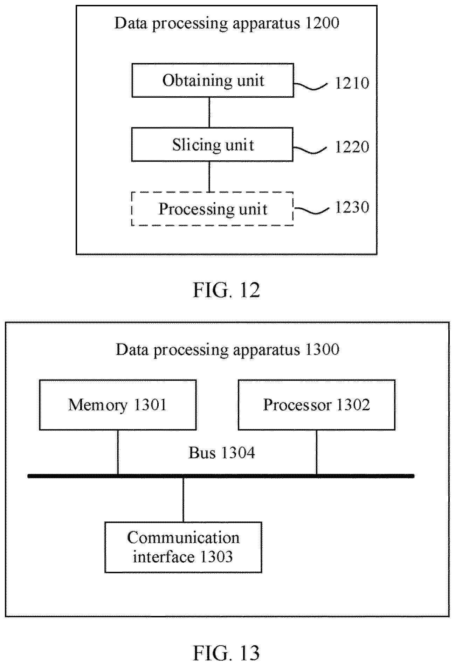

The foregoing describes the data processing system and the data processing method provided in embodiments of this application with reference to FIG. 1 to FIG. 11. The following describes apparatus embodiments in embodiments of this application with reference to FIG. 12 and FIG. 13.

It should be understood that descriptions of the data processing method correspond to descriptions of the apparatus embodiments. Therefore, for a part that is not described in detail, refer to the foregoing descriptions.

FIG. 12 is a diagram of a structure of a data processing apparatus according to an embodiment of this application. The data processing apparatus 1200 may be located in an execution device 110 shown in FIG. 1 or another device. The data processing apparatus 1200 includes an obtaining unit 1210 and a slicing unit 1220.

The obtaining unit 1210 is configured to obtain number information of a first node in a neural network graph.

The slicing unit 1220 is configured to slice a tensor of the first node based on the number information.

Optionally, the data processing apparatus further includes a processing unit 1230, configured to perform related steps or methods in the solutions shown in FIG. 8 and FIG. 10.

It should be understood that the foregoing content is merely an example description. The data processing apparatus is configured to perform the method or step mentioned in the foregoing method embodiments. Therefore, the data processing apparatus corresponds to the foregoing method embodiments. For specific content, refer to the descriptions in the foregoing method embodiments. Details are not described herein again.

FIG. 13 is a diagram of a hardware structure of a data processing apparatus according to an embodiment of this application. The data processing apparatus 1300 shown in FIG. 13 includes a memory 1301, a processor 1302, a communication interface 1303, and a bus 1304. Communication connections between the memory 1301, the processor 1302, and the communication interface 1303 are implemented through the bus 1304.

The memory 1301 may be a ROM, a static storage device, or a RAM. The memory 1301 may store a program. When the program stored in the memory 1301 is executed by the processor 1302, the processor 1302 and the communication interface 1303 are configured to perform the steps of the data processing method in embodiments of this application.

The processor 1302 may be a general-purpose CPU, a microprocessor, an ASIC, a GPU, or one or more integrated circuits, and is configured to execute a related program, to implement a function that needs to be executed by a unit in the data processing apparatus in embodiments of this application, or perform the data processing method in the method embodiments of this application.

Alternatively, the processor 1302 may be an integrated circuit chip and has a signal processing capability. For example, the processor 1302 may be the chip shown in FIG. 4. In an implementation process, the steps of the data processing method in embodiments of this application may be completed by using a hardware integrated logic circuit in the processor 4002 or instructions in a form of software.

The foregoing processor 1302 may alternatively be a general-purpose processor, a DSP, an ASIC, an FPGA or another programmable logic device, a discrete gate or transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, a register, or the like. The storage medium is located in the memory 1301. The processor 1302 reads information in the memory 1301, and completes, in combination with hardware of the processor 1302, a function that needs to be executed by a unit included in the data processing apparatus in embodiments of this application, or performs the data processing method in the method embodiments of this application.

The communication interface 1303 is but is not limited to a transceiver apparatus like a transceiver, to implement communication between the apparatus 1300 and another device or a communication network. For example, a to-be-processed image may be obtained through the communication interface 1303.

The bus 1304 may include a path for information transmission between various components (for example, the memory 1301, the processor 1302, and the communication interface 1303) of the apparatus 1300.

It should be noted that, although only the memory, the processor, and the communication interface are shown in the apparatus 1300, in a specific implementation process, a person skilled in the art should understand that the apparatus 1300 may further include another component required for implementing normal running. In addition, based on a specific requirement, a person skilled in the art should understand that the apparatus 1300 may further include a hardware component for implementing another additional function. In addition, a person skilled in the art should understand that the apparatus 1300 may alternatively include only a component required for implementing embodiments of this application, and does not need to include all components shown in FIG. 12.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, random access memories (random access memory, RAM) in a plurality of forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk.

An embodiment of this application provides a computer-readable storage medium, configured to store a computer program. When the computer program is run on a computer, the computer is enabled to perform the data processing method in the foregoing method embodiments.

An embodiment of this application provides a computer program product. The computer program product includes computer program code. When the computer program code is run, the data processing method in the foregoing method embodiments is implemented.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between associated objects, or may indicate an "and/or" relationship. A specific meaning depends on the context.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data processing method, comprising:

   obtaining number information of a first node in a neural network graph, wherein the number information comprises a tensor number and an axis number, a tensor indicated by the tensor number is a to-be-sliced tensor, and an axis indicated by the axis number is a slicing axis of the to-be-sliced tensor; and

   slicing, along the slicing axis indicated by the axis number, the to-be-sliced tensor indicated by the tensor number of the first node, wherein the neural network graph represents a neural network, and the first node represents a calculation unit of the neural network.

2. The method according to claim 1, wherein
   the number information further comprises an indication value, and the indication value indicates whether adjacent subtensors obtained by slicing the to-be-sliced tensor along the slicing axis overlap.

3. The method according to claim 2, wherein

   when the to-be-sliced tensor is an input tensor of the first node, the indication value indicates that the adjacent subtensors obtained by slicing the to-be-sliced tensor along the slicing axis overlap;

   when the to-be-sliced tensor is an input tensor of the first node, the indication value indicates that the adjacent subtensors obtained by slicing the to-be-sliced tensor along the slicing axis do not overlap; or

   when the to-be-sliced tensor is an output tensor of the first node, the indication value indicates that the adjacent subtensors obtained by slicing the to-be-sliced tensor along the slicing axis do not overlap.

4. The method according to any one of claims 1 to 3, wherein a second node is an upper-level node of the first node, the second node belongs to the neural network graph, and the method further comprises:

   determining M input intervals corresponding to a first input tensor of the first node, wherein M is a slicing quantity of the first input tensor;

   obtaining a slicing quantity K of a second output tensor of the second node; and

   determining, based on the M input intervals and K, K output intervals corresponding to the second output tensor of the second node, wherein M and K are both positive integers.

5. The method according to claim 4, wherein the determining, based on the M input intervals and K, K output intervals corresponding to the second output tensor of the second node comprises:

   if M is greater than K, aggregating the M input intervals into the K output intervals;

   if M is equal to K, performing one-to-one correspondence on the M input intervals and the K output intervals; or

   if M is smaller than K, dividing the M input intervals into the K output intervals.

6. The method according to claim 4 or 5, wherein the determining M input intervals corresponding to a first input tensor of the first node comprises:

   determining M output intervals corresponding to a first output tensor of the first node, wherein M is a slicing quantity corresponding to the first output tensor of the first node; and

   performing reverse derivation on the M output intervals corresponding to the first output tensor of the first node, to determine the M input intervals corresponding to the first input tensor of the first node.

7. The method according to any one of claims 1 to 3, wherein a second node is an upper-level node of the first node and a third node, the second node and the third node belong to the neural network graph, and the method further comprises:

determining M input intervals corresponding to a first input tensor of the first node and Y input intervals corresponding to a third input tensor of the third node, wherein M is a slicing quantity of the first input tensor, and Y is a slicing quantity of the third input tensor;

obtaining a slicing quantity K of a second output tensor of the second node; and

determining, based on the M input intervals, the Y input intervals, and K, K output intervals corresponding to the output tensor of the second node, wherein M, K, and Y are all positive integers.

8. A data processing apparatus, comprising:

an obtaining unit, configured to obtain number information of a first node in a neural network graph, wherein the number information comprises a tensor number and an axis number, a tensor indicated by the tensor number is a to-be-sliced tensor, and an axis indicated by the axis number is a slicing axis of the to-be-sliced tensor; and

a slicing unit, configured to slice, along the slicing axis indicated by the axis number, the to-be-sliced tensor indicated by the tensor number of the first node, wherein the neural network graph represents a neural network, and the first node represents a calculation unit of the neural network.

9. The apparatus according to claim 8, wherein
the number information further comprises an indication value, and the indication value indicates whether adjacent subtensors obtained by slicing the to-be-sliced tensor along the slicing axis overlap.

10. The apparatus according to claim 9, wherein

when the to-be-sliced tensor is an input tensor of the first node, the indication value indicates that the adjacent subtensors obtained by slicing the to-be-sliced tensor along the slicing axis overlap;

when the to-be-sliced tensor is an input tensor of the first node, the indication value indicates that the adjacent subtensors obtained by slicing the to-be-sliced tensor along the slicing axis do not overlap; or

when the to-be-sliced tensor is an output tensor of the first node, the indication value indicates that the adjacent subtensors obtained by slicing the to-be-sliced tensor along the slicing axis do not overlap.

11. The apparatus according to any one of claims 8 to 10, wherein a second node is an upper-level node of the first node, the second node belongs to the neural network graph, and the apparatus further comprises a processing unit, wherein

the processing unit is configured to determine M input intervals corresponding to a first input tensor of the first node, wherein M is a slicing quantity of the input tensor;

the obtaining unit is further configured to obtain a slicing quantity K of a second output tensor of the second node; and

the processing unit is further configured to determine, based on the M input intervals and K, K output intervals corresponding to the second output tensor of the second node, wherein M and K are both positive integers.

12. The apparatus according to claim 11, wherein the processing unit is configured to:

if M is greater than K, aggregate the M input intervals into the K output intervals;

if M is equal to K, perform one-to-one correspondence on the M input intervals and the K output intervals; or

if M is smaller than K, divide the M input intervals into the K output intervals.

13. The apparatus according to claim 11 or 12, wherein the processing unit is further configured to:

determine M output intervals corresponding to a first output tensor of the first node, wherein M is a slicing quantity corresponding to the first output tensor of the first node; and

perform reverse derivation on the M output intervals corresponding to the first output tensor of the first node, to determine the M input intervals corresponding to the first input tensor of the first node.

14. The apparatus according to any one of claims 8 to 10, wherein a second node is an upper-level node of the first node and a third node, the second node and the third node belong to the neural network graph, and the apparatus further comprises a processing unit, wherein

the processing unit is configured to determine M input intervals corresponding to a first input tensor of the first node and Y input intervals corresponding to a second input tensor of the third node, wherein M is a slicing quantity of the first input tensor, and Y is a slicing quantity of the second input tensor;

the obtaining unit is further configured to obtain a slicing quantity K of a second output tensor of the second node; and

the processing unit is further configured to determine, based on the M input intervals, the Y input intervals, and K, K output intervals corresponding to the output tensor of the second node, wherein M, Y, and K are all positive integers.

15. A computer-readable storage medium, wherein the computer-readable storage medium is configured to store a computer program, and when the computer program is run on a computer or a processor, the computer or the processor is enabled to perform the method according to any one of claims 1 to 7.

16. A computer program product, wherein the computer program product comprises computer program code, and when the computer program code is run, the method according to any one of claims 1 to 7 is implemented.

Intelligent information chain

IT value chain

Intelligent product and industry application

General capabilities

Translation/Text analysis/...

Voice/Vision/Image/...

Data processing

Data training/Machine learning/Deep learning

Search/Inference/Decision-making

...

Data

Infrastructure

Sensor

Intelligent chip

Base platform

...

FIG. 1

EP 4 439 390 A1

System architecture 200

FIG. 2

| Data processing result |
|---|

**Convolutional neural network (CNN) 300**

**Neural network layer 330**

| Output layer 340 |
|---|
| Hidden layer n (33n) |
| Hidden layer 2 (332) |
| Hidden layer 1 (331) |

**Convolutional layer/Pooling layer 320**

| 326 |
|---|
| 325 |
| 324 |
| 323 |
| 322 |
| 321 |

| Input layer 310 |
|---|

| To-be-processed data |
|---|

FIG. 3

Data processing result

Output layer 340

Neural
network
layer
330

Hidden layer n (33n)

Hidden layer 2 (332)

Hidden layer 1 (331)

| | | |
|---|---|---|
| 326 | 326 | 326 |
| 325 | 325 | 325 |
| 324 | 324 | 324 |
| 323 | 323 | 323 |
| 322 | 322 | 322 |
| 321 | 321 | 321 |

Convolutional
layer/Pooling
layer
320

Convolutional
neural network
(CNN)
300

Input layer 310

To-be-processed data

FIG. 4

FIG. 5

Neural-network processing unit 50

Instruction fetch buffer 509

Controller 504

Weight memory 502

Operation circuit 503

Accumulator 508

Input memory 501

Vector calculation unit 507

Unified memory 506

Bus interface unit 510

Direct memory access controller 505

Host CPU

External memory

600

Execution device 610

Data storage system 650

Communication network

Local device
601

Local device
602

Examples

FIG. 6

Obtain number information of a first node in a neural network graph, where the number information includes a tensor number and an axis number, a tensor indicated by the tensor number is a to-be-sliced tensor, and an axis indicated by the axis number is a slicing axis of the to-be-sliced tensor — S710

Slice, along the slicing axis indicated by the axis number, the to-be-sliced tensor indicated by the tensor number of the first node — S720

FIG. 7

Determine M input intervals corresponding to a first input tensor of a first node, where M is a slicing quantity of the first input tensor — S810

Determine a slicing quantity K of a second output tensor of a second node — S820

Determine, based on the M input intervals and K, K output intervals corresponding to the second output tensor of the second node — S830

FIG. 8

Second node

Output tensor: a
slicing quantity is K

Input tensor: a
slicing quantity is M

First node

— ➤ Derivation sequence

⟶ Data processing sequence

FIG. 9

Determine M input intervals corresponding to a first input tensor of a first node and Y input intervals corresponding to a third input tensor of a third node, where M is a slicing quantity of the first input tensor, and Y is a slicing quantity of the third input tensor — S1010

Determine a slicing quantity K of a second output tensor of a second node — S1020

Determine, based on the M input intervals, the Y input intervals, and K, K output intervals corresponding to the second output tensor of the second node — S1030

FIG. 10

— ► Derivation sequence

——► Data processing sequence

Second node

Output tensor: a slicing quantity is K

Input tensor: a slicing quantity is M

Input tensor: a slicing quantity is Y

First node

Third node

FIG. 11

Data processing apparatus 1200

Obtaining unit ∿ 1210

Slicing unit ∿ 1220

Processing unit ∿ 1230

FIG. 12

Data processing apparatus 1300

Memory 1301

Processor 1302

Bus 1304

Communication interface 1303

FIG. 13

## INTERNATIONAL SEARCH REPORT

| | International application No. |
|---|---|
| | **PCT/CN2021/141461** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N G06F

Documentation searched other than minimum documentation to the extent that such documents are included in the fields searched

Electronic data base consulted during the international search (name of data base and, where practicable, search terms used)

CNKI, CNPAT, EPODOC, WPI: 神经网络图, 节点, 编号, 编码, 切分, 张量, 轴, 重叠, 区间, 内存, 限制, 人工智能, neural network graph, node, tensor, number, segment, divide, axis, artificial intelligence, overlap, area, memory bound

**C. DOCUMENTS CONSIDERED TO BE RELEVANT**

| Category* | Citation of document, with indication, where appropriate, of the relevant passages | Relevant to claim No. |
|---|---|---|
| A | CN 113449859 A (HUAWEI TECHNOLOGIES CO., LTD.) 28 September 2021 (2021-09-28) description, paragraphs [0239]-[0253] | 1-16 |
| A | CN 112799598 A (TSINGHUA UNIVERSITY) 14 May 2021 (2021-05-14) entire document | 1-16 |
| A | CN 112507173 A (WUXI LINGXI BRAIN TECHNOLOGY CO., LTD.) 16 March 2021 (2021-03-16) entire document | 1-16 |
| A | CN 111062467 A (OPEN AI LAB (SHANGHAI) CO., LTD.) 24 April 2020 (2020-04-24) entire document | 1-16 |
| A | US 2021343019 A1 (ROBERT BOSCH GMBH) 04 November 2021 (2021-11-04) entire document | 1-16 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 September 2022** | **27 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141461**

| Patent document cited in search report | | | Publication date (day/month/year) | Patent family member(s) | | | Publication date (day/month/year) |
|---|---|---|---|---|---|---|---|
| CN | 113449859 | A | 28 September 2021 | None | | | |
| CN | 112799598 | A | 14 May 2021 | None | | | |
| CN | 112507173 | A | 16 March 2021 | None | | | |
| CN | 111062467 | A | 24 April 2020 | None | | | |
| US | 2021343019 | A1 | 04 November 2021 | CN | 113168558 | A | 23 July 2021 |
| | | | | WO | 2020069964 | A1 | 09 April 2020 |
| | | | | DE | 102018217092 | A1 | 09 April 2020 |

Form PCT/ISA/210 (patent family annex) (January 2015)